# EUROPÄISCHE PATENTSCHRIFT

(11) **EP 1 299 847 B1**
(45) Veröffentlichungstag und Bekanntmachung des Hinweises auf die Patenterteilung: **07.12.2005**
(21) Anmeldenummer: 01953192.0
(22) Anmeldetag: 06.07.2001
(51) Int. Cl.: G06F 19/00

(54) **VERFAHREN ZUM VERARBEITEN VON MEHREREN UNTERSCHIEDLICHEN DATENSTRUKTUREN**
METHOD FOR THE PROCESSING OF SEVERAL DIFFERENT DATA STRUCTURES
PROCEDE POUR LE TRAITEMENT DE PLUSIEURS STRUCTURES DE DONNEES DIFFERENTES

(30) Priorität: 07.07.2000 DE 10033021
(43) Veröffentlichungstag der Anmeldung: 09.04.2003
(73) Patentinhaber: Definiens AG, 80339 München (DE)
(72) Erfinder: ATHELOGOU, Maria, 80469 München (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2001/007795
(87) Internationale Veröffentlichungsnummer: WO 2002/005198

(56) Entgegenhaltungen:
- WO-A-00/20964
- WO-A-01/45033
- YU H ET AL: "Representing Genomic Knowledge in the UMLS Semantic Network" PROCEEDINGS OF THE 1999 AMERICAN MEDICAL INFORMATICS ASSOCIATION SYMPOSIUM, [Online] 6. - 10. November 1999, Seiten 181-185, XP002207393 Gefunden im Internet: <URL:http://www.amia.org/pubs/symposia/D00 5384.pdf> [gefunden am 2002-07-23]
- GRAVES M ET AL: "GRAPH DATABASE SYSTEMS" IEEE ENGINEERING IN MEDICINE AND BIOLOGY MAGAZINE, IEEE INC. NEW YORK, US, Bd. 14, Nr. 6, 1. November 1995 (1995-11-01), Seiten 737-745, XP000598298 ISSN: 0739-5175
- KARP P D: "An ontology for biological function based on molecular interactions" BIOINFORMATICS, [Online] Bd. 16, Nr. 3, März 2000 (2000-03), Seiten 269-285, XP002207394 Gefunden im Internet: <URL:http://bioinformatics.oupjournals.org /cgi/reprint/16/3/269.pdf> [gefunden am 2002-07-23]
- PATON N W ET AL: "Conceptual Modelling of Genomic Information" BIOINFORMATICS, [Online] Bd. 16, Nr. 6, Juni 2000 (2000-06), Seiten 548-557, XP002207395 Gefunden im Internet: <URL:http://bioinformatics.oupjournals.org /cgi/reprint/16/6/548.pdf> [gefunden am 2002-07-23]

## Beschreibung

Die vorliegende Erfindung betrifft ein computerimplementiertes Verfahren zum objektorientierten Erfassen und Verarbeiten von mehreren Datenstrukturen gleicher oder unterschiedlicher Inhalte und insbesondere von genetischen, biologischen, biomedizinischen und biochemischen Datenstrukturen und betrifft insbesondere ein computerimplementiertes Verfahren, das für eine Mustererkennung, eine Gruppierung von Einzeldaten, das heißt eine Objektextraktion, und eine Simulation anhand der zu verarbeitenden Datenstrukturen verwendbar ist.

In der Genetik wird mit dem Ausdruck "Sequenzanalyse" das positionsgetreue Identifizieren von monomeren Bausteinen in einer makromolekularen Kette einer Nukleinsäure, eines Proteins usw. bezeichnet. Der Ausdruck "Sequenzanalyse" bezieht sich also auf ein chemisches Analyseverfahren. Dahingegen bezieht sich der Ausdruck "vergleichende Sequenzanalyse" darauf, daß vorausgesetzt wird, daß für die in Frage stehende Menge von Makromolekülen die Bausteinabfolge als solche bereits bekannt ist und daß es die Informationsbeziehungen zwischen verschiedenen Sequenzen sind, die einer vergleichenden Analyse zu unterziehen sind.

Sequenzanalyseverfahren im Stand der Technik sind meistens darauf beschränkt, zum Beispiel Basentripletts in einer langen Reihe von Basen hintereinander abzulesen, ohne daß bei diesem Vorgang eine Wissensintelligenz zum Erfassen und Zuordnen jeweiliger Strukturen zugrunde liegt. Dies hat eine hohe Fehlerquote bei dem jeweiligen Erfassen einer genetischen Information zur Folge. Ferner ist es bei einer Vergleichsanalyse und insbesondere bei einer vergleichenden Sequenzanalyse schwierig, eine Zuordnung einer erkannten Struktur zu einer genetischen Information zu erreichen. Dies liegt insbesondere an der natürlichen Vielfalt von genetischen Informationen.

Ferner werden bis jetzt lediglich bedingt dynamische Datenbanken verwendet, welche eine auf eine Fragestellung bezogene Verarbeitung innerhalb der entsprechenden Datenbank zulassen. Daher ist eine dynamische, automatische Vernetzung all derjenigen Datenbanken, welche genetische Informationen beinhalten, lediglich bedingt möglich. Genauso ist bei einer Vernetzung ein reibungsloser Informationsfluß sowohl zwischen verschiedenen Datenbanken als auch lokal innerhalb jeweiliger der Datenbanken im Sinne von gleichzeitig und autonom lediglich bedingt möglich.

Aus der WO-A-0 145 033, die einen Stand der Technik nach **Artikel 54(3) EPÜ** bildet, ist ein Verfahren zum Verarbeiten von mehreren Datenstrukturen mittels miteinander vernetzten semantischen Einheiten bekannt, wobei das Verfahren die folgenden Schritte aufweist: Erfassen von Daten, aus denen die mehreren Datenstrukturen ableitbar sind, wobei jeweilige Datenstrukturen in jeweiligen miteinander vernetzten Netzen von semantischen Einheiten abgebildet werden; und Erzeugen, Analysieren, Abwandeln, Löschen und/oder Speichern der semantischen Struktureinheiten und/oder deren Vernetzung aufgrund der erfaßten Daten unter Verwendung einer aus einem Netz von semantischen Wissenseinheiten bestehenden Wissensbasis, wobei in iterativen Schritten semantische Struktureinheiten und/oder deren Vernetzung klassifiziert werden und aufgrund dieser Klassifikation eine spezifische Verarbeitung aktivierbar ist, welche eine jeweilige semantische Struktureinheit und/oder ein bestimmtes Teilnetz verändert.

Aus der WO-A-0 020 964 ist ein semantisches Netz bekannt, bei dem neu einzugebende Daten in Form von semantischen Einheiten vorliegen müssen.

Aus Yu H. et al.: "REPRESENTING GENOMIC KNOWLEDGE IN THE UMLS SEMANTIC NETWORK", Proceedings of the 1999 AMERICAN ASSOCIATION SYMPOSIUM, 'Online!, 6. bis 10. November 1999, Seiten 181 bis 186, XP002207393, aus Graves M. et al.: "GRAPH DATABASE SYSTEMS", IEEE Engineering in Medicine and Biology Magazine, IEEE Inc, New York, US, Bd. 14, Nr. 6, 1. November 1995, Seiten 737 bis 745, XP000598298, ISSN 0739-5175 und aus Karp P. D.: "AN ONTOLOGY FOR BIOLOGICAL FUNCTION BASED ON MOLECULAR INTERACTIONS", Bioinformatics, 'Online!, Bd. 16, Nr. 3, März 2000, Seiten 269 bis 285, XP002207394 ist jeweils bekannt, ein semantisches Netz als Datenbank für eine Ontologie bezüglich genetischer Informationen zu verwenden.

Die vorliegende Erfindung ist im Hinblick auf die zuvor beschriebenen Probleme geschaffen worden.

Es ist demgemäß die Aufgabe der vorliegenden Erfindung, ein Verfahren zum Verarbeiten von mehreren unterschiedlichen Datenstrukturen und von deren Vernetzung zu schaffen, das imstande ist, einen reibungslosen Informationsfluß sowohl zwischen verschiedenen Datenbanken als auch lokal innerhalb jeweiliger der Datenbanken in allen Richtungen zu gewährleisten.

Diese Aufgabe wir mit den in Anspruch 1 angegebenen Maßnahmen gelöst.

Dadurch, daß gemäß dem Gegenstand des Anspruchs 1 jeweilige unterschiedliche Datenstrukturen in jeweiligen unterschiedlichen Netzen von Struktureinheiten abgebildet werden, besteht demgemäß die Möglichkeit, daß sowohl jede Datenstruktur für sich als auch die Datenstrukturen untereinander unter Verwendung des Netzes von semantischen Wissenseinheiten klassifiziert und verarbeitet werden können. Diese Klassifikationen und Verarbeitungen der Datenstrukturen für sich als auch untereinander können gleichzeitig durchgeführt werden. Auf diese Weise können Abhängigkeiten oder Beziehungen sowohl in als auch zwischen den jeweiligen Netzen bei der Verarbeitung berücksichtigt werden. Dadurch besteht die Möglichkeit, in allen Richtungen sowohl in einem jeweiligen Netz von Struktureinheiten als auch zwischen allen jeweiligen Netzen von semantischen Struktureinheiten Informationsflüsse zu gewährleisten, die gegenseitig ebenso in Wechselwirkung miteinander stehen können.

Weitere vorteilhafte Ausgestaltungen der vorliegenden Erfindung sind Gegenstand der abhängigen Ansprüche.

Es zeigt:
- **Fig. 1**: eine schematische Darstellung mehrerer hierarchischer Netze von Struktureinheiten gemäß einem Ausführungsbeispiel der vorliegenden Erfindung;
- **Fig. 2**: eine lokale Operation "Fusion" innerhalb der hierarchischen Netze von Struktureinheiten anhand eines jeweiligen Netzausschnitts gemäß dem Ausführungsbeispiel der vorliegenden Erfindung;
- **Fig. 3**: eine lokale Operation "Gründen" innerhalb der hierarchischen Netze von Struktureinheiten anhand eines jeweiligen Netzausschnitts gemäß dem Ausführungsbeispiel der vorliegenden Erfindung;
- **Fig. 4**: eine lokale Operation "Einhängen eines Nachbarn als Unter-Strukturobjekt" innerhalb der hierarchischen Netze von Struktureinheiten anhand eines jeweiligen Netzausschnitts gemäß dem Ausführungsbeispiel der vorliegenden Erfindung;
- **Fig. 5**: eine lokale Operation "Ausgliedern" innerhalb der hierarchischen Netze von Struktureinheiten anhand eines jeweiligen Netzausschnitts gemäß dem Ausführungsbeispiel der vorliegenden Erfindung;
- **Fig. 6**: eine lokale Operation "Einhängen eines neuen Unter-Strukturobjekts" innerhalb der hierarchischen Netze von Struktureinheiten anhand eines jeweiligen Netzausschnitts gemäß dem Ausführungsbeispiel der vorliegenden Erfindung;
- **Fig. 7**: eine lokale Operation "Teilen" innerhalb der hierarchischen Netze von Struktureinheiten anhand eines jeweiligen Netzausschnitts gemäß dem Ausführungsbeispiel der vorliegenden Erfindung;
- **Fig. 8**: eine lokale Operation "Umgruppieren" innerhalb der hierarchischen Netze von Struktureinheiten anhand eines jeweiligen Netzausschnitts gemäß dem Ausführungsbeispiel der vorliegenden Erfindung;
- **Fig. 9**: eine lokale Operation "Springen/Vertauschen" innerhalb der hierarchischen Netze von Struktureinheiten anhand eines jeweiligen Netzausschnitts gemäß dem Ausführungsbeispiel der vorliegenden Erfindung;
- **Fig. 10**: eine lokale Operation "Randoptimierung" innerhalb der hierarchischen Netze von Struktureinheiten anhand eines jeweiligen Netzausschnitts gemäß dem Ausführungsbeispiel der vorliegenden Erfindung;
- **Fig. 11**: ein Beispiel einer vernetzten Umgebung eines klassifizierten Strukturobjekts und eines entsprechenden Klassenobjekts in schematischer Darstellung;
- **Fig. 12**: ein Beispiel eines klassifizierten hierarchischen Netzes von Struktureinheiten einer DNA-Datenstruktur gemäß dem Ausführungsbeispiel der vorliegenden Erfindung;
- **Fig. 13**: eine Darstellung von Klassenobjekten in einer Gruppierungshierarchie gemäß der DNA-Datenstruktur in **Fig. 12;**
- **Fig. 14**: ein Beispiel eines klassifizierten hierarchischen Netzes von Struktureinheiten einer RNA-Datenstruktur gemäß dem Ausführungsbeispiel der vorliegenden Erfindung;
- **Fig. 15**: eine Darstellung von Klassenobjekten in einer Gruppierungshierarchie gemäß der DNA-Datenstruktur in **Fig. 14;**
- **Fig. 16**: ein Beispiel eines klassifizierten hierarchischen Netzes von Struktureinheiten einer Protein-Datenstruktur gemäß dem Ausführungsbeispiel der vorliegenden Erfindung; und
- **Fig. 17**: eine Darstellung von Klassenobjekten in einer Gruppierungshierarchie gemäß der Protein-Datenstruktur in **Fig. 16.**

Nachstehend erfolgt die Beschreibung eines Ausführungsbeispiels der vorliegenden Erfindung.

Bezüglich der in dieser Anmeldung verwendeten Begriffe "semantisches Netz", "semantische Einheit", "Verknüpfungsobjekt" und "Prozessierungsobjekt" wird auf die Anmeldung des Anmelders der vorliegenden Erfindung mit dem amtlichen Aktenzeichen 199 60 372.3 mit dem Titel "Verfahren zur Verarbeitung von Datenstrukturen", eingereicht am 14. Dezember 1999, auf die Anmeldung des Anmelders der vorliegenden Erfindung mit dem amtlichen Aktenzeichen 199 08 204.9 mit dem Titel "Fraktales Netz n-ter Ordnung zum Behandeln komplexer Strukturen", eingereicht am 25. Februar 1999, und auf die Anmeldung des Anmelders der vorliegenden Erfindung mit dem amtlichen Aktenzeichen 199 175 92.6 mit dem Titel "Situationsabhängig operierendes semantisches Netz n-ter Ordnung", eingereicht am 19. April 1999, verwiesen, wobei die Begriffe "semantisches Netz" und "fraktales Netz" als gleichbedeutend anzusehen sind, die Begriffe "Januseinheit" und "Prozessierungsobjekt" als gleichbedeutend anzusehen sind und die Begriffe "Verknüpfungseinheit" und "Verknüpfungsobjekt" als gleichbedeutend anzusehen sind. Die in vorstehend genannten Anmeldungen offenbarten Merkmale bezüglich des Aufbaus und der Funktionsweise des "fraktalen Netzes", des "semantischen Netzes", der "semantischen Einheit", der "Verknüpfungseinheit" und der "Januseinheit" gelten als in dieser Anmeldung durch Verweis eingeschlossen.

Vorab ist anzumerken, daß das nachstehend beschriebene Verfahren sowohl auf einem einzelnen Computer als auch auf einem verteilten Netz von Computern, wie zum Beispiel einem LAN oder WAN, implementiert werden kann, wobei im letzteren Fall des Netzes von Computern die Bestandteile des semantischen Netzes sowohl zentral als auch dezentral vorliegen können. Das nachstehend beschriebene Verfahren kann also allgemein als computerimplemtiertes Verfahren bezeichnet werden, das mehrere Datenstrukturen verarbeitet.

Ferner ist anzumerken, daß, obgleich ein nachstehend beschriebenes Ausführungsbeispiel der vorliegenden Erfindung ein Verfahren zur Verarbeitung von genetischen Datenstrukturen gleicher oder unterschiedlicher Inhalte beschreibt, die vorliegende Erfindung nicht auf diesen Anwendungsbereich beschränkt ist. Vielmehr kann das erfindungsgemäße Verfahren an allen Datenstrukturen angewendet werden, die in einem Zusammenhang stehen.

Bevor das Ausführungsbeispiel der vorliegenden Erfindung detailliert erläutert wird, wird hier ein Überblick über den Aufbau des genetischen Codes, über die Probleme bei der Entschlüsselung des genetischen Codes sowie über den Mechanismus der Proteinsynthese gegeben.

Der Aufbau des genetischen Codes findet nach dem bisher vorliegenden Wissen sein Analogon in den Sprachwissenschaften nach dem folgenden Schema: Basen bzw. Nukleotide wie Buchstaben, Codogene und Codons wie Wörter, Gene wie Sätze, Operonen wie Abschnitte, Chromosomen wie Schriftstücke, DNA und RNA wie Bibliotheken, Wissen über das Genom wie alle Schriftstücke, die das menschliche Wissen beinhalten.

Jeweilige Definitionen von verschiedenen nachstehend verwendeten Begriffen sind wie folgt:
**Basen** sind Bestandteile von monomeren Bausteinen der Nukleinsäuren DNA und RNA, das heißt Adenin bzw. A, Guanin bzw. G, Cytosin bzw. C und Thymin bzw. T (DNA) oder Uracil bzw. U (RNA).
**Basenpaare** bilden sich bevorzugt aus A mit T (DNA) bzw. U (RNA) und G mit C.
**Nukleotide** sind die monomeren Bausteine der Nukleinsäuren DNA und RNA.
**Codogene** (DNA) **bzw. Codons** (RNA) sind eine Sequenz von drei benachbarten Nukleotiden, die für eine Aminosäure, für "START" oder für "STOPP" codieren.
**Gene** sind die Einheiten in einem DNA-Doppelstrang von Chromosomen, die die Information bzw. Bauanleitung für ein Proteinmolekül enthalten.
**Operonen** sind die Einheiten von gemeinsam regulierenden Genen und weisen ein Operatorgen, ein Regulatorgen und meist mehrere Strukturgene auf.
**Chromosomen** sind die Einheiten des Erbguts und weisen eine fadenförmige Struktur auf, in der das Erbmaterial von Zellen niedergelegt ist.
**DNA** bzw. **Desoxyribonukleinsäure** ist ein molekularer Träger der Erbinformation.
**RNA** bzw. **Ribonukleinsäure** ist ein weiterer molekularer Träger der Erbinformation, wobei die RNA aus der DNA synthetisiert wird und in drei verschiedenen Formen, das heißt der Transfer- bzw. t-RNA, der Boten- bzw. m-RNA und der ribosomalen bzw. r-RNA, vorkommt.
**Genom** ist die Gesamtheit aller Gene einer Zelle, das heißt eines Organismus.
**Genetik** ist die Lehre von der Ausbildung erblicher Merkmale und deren Übertragung in aufeinanderfolgenden Generationen.
**Nukleotidsequenzen** sind die schriftartigen Reihenfolgen der Nukleotide in der DNA und RNA.
**Aminosäuren** sind die Bausteine der Proteine, wobei es zwanzig verschiedene Aminosäuren gibt, die als L-Stereoisomere bzw. Linschrauben vorliegen. Aminosäuren weisen alle die gleiche Grundstruktur auf, unterscheiden sich jedoch in einer eine spezielle Wirkungsgruppe tragenden Seitenkette.
**Proteine** sind Eiweißstoffe, die die wichtigsten Makromoleküle einer lebenden Zelle sind. Ihre Grundstruktur ist eine Polypeptidkette, die zwischen hundert und einigen hundert Aminosäurebausteinen enthält. Diese Kette faltet sich in charakteristischer Weise, wodurch verschiedene Wirkungsgruppen eng zusammengeführt werden und ein aktives katalytisches Zentrum ausbilden können, wie es zum Beispiel in "Stufen zum Leben" von Manfred Eigen, Piper, München, Zürich, 1987, beschrieben ist.

Lebewesen verwenden als Speicher für das Erbmaterial die DNA und verarbeiten diese gespeicherte Information nach dem folgenden Schema:

DNA als Legislative, RNA als Nachricht, Protein als Exekutive und Stoffwechsel als Funktion.

Das Schema und die Detailstrukturen sind universell. Alle Lebewesen verwenden einen universellen genetischen Code, eine universelle biochemische Maschinerie und makromolekulare Syntheseprodukte.

Aus der zuvor angeführten Literaturstelle ist es ferner ersichtlich, daß die Voraussetzungen für die Verwendung der Nukleinsäuren als Informationsspeicher durch die Chemie erfüllt werden.

Wie es zuvor beschrieben worden ist, weisen Nukleinsäuren vier chemisch klassifizierte Verbindungen, das heißt zwei Purine A und G und zwei Pyrimidine C und T (DNA) bzw. U (RNA) auf. Die Verknüpfung der Nukleotide zu einem Makromolekül gewährleistet einen metastabilen und dadurch lediglich temporären Zusammenhalt einer Nachricht. Es existiert eine durch Wasserstoffbrücken vermittelte spezifische Wechselwirkung zwischen jeweils einem Purin und einem Pyrimidin, wobei sich A mit T (DNA) oder U (RNA) und G mit C aneinanderlagern. Es wird von Komplementarität der beiden jeweils zu einer Wechselwirkung befähigten Basen gesprochen. Allein diese sorgt dafür, daß eine Nachricht überhaupt lesbar wird und daß die temporär stabile Nachricht durch Reproduktion unbegrenzt erhalten bleibt. Weiterhin liefert die Komplemetarität Erkennungsfunktionen, die bei Steuer- und Regelfunktionen verwendet werden.

Aminosäuren sind durch den genetischen Code den 4³ = 64 möglichen Dreierkombinationen der vier Basen zugeordnet. Jedes Codogen bzw. Codon ist eindeutig einer Aminosäure zugeordnet, während jedoch umgekehrt einer Aminosäure mehrere Codogene bzw. Codons zugeordnet sein können. Dadurch ergibt sich eine Redundanz, die für eine Funktionssprache, wie sie die Proteine repräsentieren, von Vorteil ist. Die Information fließt im allgemeinen von der DNA über die RNA zu den Proteinen, die alles weitere bewerkstelligen. Es existieren jedoch auch rückläufig schreibende Enzyme, die eine RNA-Information in einen DNA-Doppelstrang umkopieren. Eine Information, die in Proteinketten niedergelegt ist, kann dagegen nicht mehr kolinear in die RNA zurückgesetzt werden.

Bei der Entschlüsselung des genetischen Codes treten die folgenden Probleme auf.

Die DNA und die RNA sind Makromoleküle, in denen die gesamte Erbinformation gespeichert ist. Die funktionellen Einheiten der Vererbung, das heißt die Gene, bewirken eine Ausbildung von Merkmalen auf eine derartige Weise, daß sie eine Synthese von einer Art von Makromolekülen, den Nukleinsäuren, zu einer anderen Art von Makromolekülen, den Proteinen, steuern. Beiden dieser Arten von Makromolekülen ist gemeinsam, daß sie unverzweigte Ketten aus einer begrenzten Auswahl von einzelnen Bausteinen darstellen. Die Proteine enthalten zwanzig Arten von Aminosäuren, von denen ungefähr hundert bis dreihundert eine Polypeptidkette bilden. Die Art und die Reihenfolge der Aminosäuren veranlassen die Polypeptidkette dazu, sich spontan auf eine geordnete Weise zu einem funktionsfähigen Enzym oder Strukturprotein zu falten. Die Nukleinsäuren enthalten vier Arten von Nukleotiden bzw. Basen. Die DNA enthält A, T, G und C und die RNA enthält A, U, G, C. Eine lineare, schriftartige Abfolge der Bausteine legt die Möglichkeit nahe, daß die Nukletidabfolge der Gene die Aminosäureabfolge der Proteine nach irgendeiner Regel verschlüsselt. Im einfachsten Fall würde eine Gruppe benachbarter Nukleotide eine Aminosäure symbolisieren und würden die Gruppen benachbarter Nukleotide einander in der gleichen Anordnung folgen wie die zugehörigen Aminosäuren in der Polypeptidkette.

Mit diesem Ansatz verringert sich ein zentrales biologisches Problem auf die formale Frage, auf welche Weise eine Schrift mit zwanzig Buchstaben zu einer Schrift mit vier Buchstaben verschlüsselt ist. Um zwischen der Vielzahl theoretischer Möglichkeiten zu entscheiden, mußten in der Vergangenheit die folgenden Fragen geklärt werden:
1. Führt eine punktförmige Änderung in der Schrift der Nukleinsäure wirklich zu einer Änderung eines kleinen Segments in der Aminosäurekette?
   - **Antwort:**: Eine punktförmige Änderung führt zu einem Austausch einzelner Aminosäuren. Es gibt eine Abbildung von Punkt zu Punkt.
2. Ist die Bedingung der Kolinearität erfüllt, das heißt entspricht einer Folge von punktförmigen Änderungen in der Nukleinsäure abc auch immer einer Folge ABC entsprechender Änderungen in der Aminosäurekette und nicht ACB oder BAC?
   - **Antwort:**: Es findet kein Austausch von benachbarten Aminosäuren statt, wodurch ein überlappender Code ausgeschlossen ist. Es gibt also eine Kolinearität zwischen der Reihenfolge der Codewörter in der Nukleinsäure und der Reihenfolge der Codewörter im Protein.
3. Weisen alle Codewörter, das heißt Nukleotidgruppen, die einer Aminosäure entsprechen, die gleiche Länge auf und, wenn dies der Fall ist, die aus Gründen der Kombinatorik minimale Länge von drei Nukleotiden oder eine größere?
   - **Antwort:**: Je drei Nukleotide verschlüsseln eine Aminosäure. Es folgt ein Beispiel für Mutationen:
   (1) Die RNA IST AUF DEM WEG VOM GEN ZUR TAT
      Ein Beseitigen eines Buchstabens (in IST) am Anfang des Satzes ergibt Unsinn:
   (2) DIE RNA ISA UFD EMW EGV OMG ENZ URT AT...
      Das gleiche gilt bei einem Hinzufügen eines Buchstabens (in IST):
   (3) DIE RNA EIS TAU FDE MWE GVO MGE NZU RTA T...
      Ein Beseitigen und Hinzufügen an zwei nicht zu entfernten Stellen (in IST) stellt den Sinn wieder ungefähr her:
   (4) DIE RNA EIS AUF DEM WEG VOM GEN ZUR TAT
      Weitere zwei fehlende oder zusätzliche Buchstaben machen den Sinn ebenso unverständlich, drei in einem kleinen Abschnitt fehlende Buchstaben (in IST und DEM) machen den Satz jedoch wieder erratbar:
   (5) DIE RNA IAU FDE WEG VOM GEN ZUR TAT.
      Der gleiche Effekt ergibt sich bei drei zusätzlichen Buchstaben am Anfang des Satzes.
4. Wenn zum Beispiel die Länge der Codewörter drei Nukleotide ist, muß dann die Nukleotidfolge (abcdefghi), wobei die Buchstaben die Positionen in der Kette bedeuten, stark überlappend (abc bcd cde...), schwach überlappend (abc cde efg...) oder nicht überlappend (abc def ghi) gelesen werden?
   - **Antwort:**: Die Nukleotidfolge muß nicht überlappend gelesen werden, siehe Antwort zu 1. und 2.
5. Ist der Anfang eines Codeworts markiert oder werden Grenzen zwischen den Codewörtern durch alleiniges Auszählen der Nukleotide vom Anfang bestimmt?
   - **Antwort:**: Die sich ergebende Frage ist, wodurch auf der m-RNA, wenn diese mehrere Proteine determiniert, ein Anfang und ein Ende des einem Protein zugehörigen Abschnitts gekennzeichnet wird. Es ist festgestellt worden, daß die entsprechende Information in besonderen Nukleotidtripletts bzw. Codons vorliegt: START, das heißt AUG oder GUG (Erscheinen die gleichen Codewörter im laufenden Text, haben sie eine andere Bedeutung. Die nähere Umgebung der Codewörter spielt also eine Rolle bei der Festlegung von ihrer Bedeutung), und STOPP, das heißt UAG, UAA, UGA.
6. Kennt der Code Satzeichen, das heißt, sind der Anfang und das Ende derjenigen Codewortfolge gekennzeichnet, die für die ganze Polypeptidkette codiert?
   - **Antwort:**: siehe Antwort zu 5.
7. Wie lautet das Lexikon der Codewörter? Gibt es mehrere Fälle wie mehrere Codewörter für eine Aminosäure (Degeneration des Codes) oder mehrere Aminosäuren für ein Codewort (Mehrdeutigkeit des Codes)?
   - **Antwort:**: Es gibt ein Lexikon zu den ersten, zweiten und dritten Buchstaben. Ferner weist die t-RNA die Fähigkeit des Einfügens eines Aminosäurerests auf, wodurch die Funktionsfähigkeit eines Proteins nicht gestört, sondern weitergeführt wird. Jedoch arbeitet dieser Reparaturmechanismus nicht zu einhundert Prozent. Zum Beispiel wird UAG im nicht-permissiven Normalstamm von E.coli eindeutig mit STOPP übersetzt. Im permisssiven Wirt von E.coli kann es jedoch sowohl mit STOPP als auch mit Serin übersetzt werden, ist also zweideutig. Eine Zweideutigkeit bei einem Ablesen der m-RNA kann ebenso in vitro durch Änderung von Außenfaktoren verursacht werden. Die Untersuchung der Rolle von verschiedenen Arten von t-RNA bei dem Übersetzen von Basentripletts gleicher Bedeutung ergab, daß er zwar mehr verschiedene t-RNA-Moleküle als Aminosäuren gibt, jedoch gibt es weniger t-RNA-Moleküle als Basentripletts. Die Anzahl der Arten der t-RNA liegt also zwischen der Anzahl der Basentripletts (64) und der Anzahl der Aminosäuren (20). In vielen Fällen muß deshalb eine einzige t-RNA mehr als ein Basentriplett erkennen. Diese Schlußfolgerung ist nicht mit einer perfekten Basenpaarung zwischen den Codons auf der m-RNA und den Anticodons auf der t-RNA vereinbar. Von Crick wurde deshalb ein Modell vorgeschlagen, bei dem die Basenpaarung an der dritten Stelle des Codons der m-RNA ein gewisses Spiel zwischen mehreren Möglichkeiten hat. Dies wird als Wobble-Hypothese bezeichnet und erklärt zugleich einige Regelmäßigkeiten im Code-Schema.
8. Eng mit 7. verknüpft: Ist der Code bei einem bestimmten Organismus vollständig unabhängig von den physiologischen Bedingungen und, wenn dies zumindest im großen und ganzen der Fall ist, ist der Code bei allen Organismen gleich, das heißt ist der Code universell?
   - **Antwort:**: Mit der Einschränkung einer Suppression, der extremen Änderung von Außenfaktoren und bestimmten toxischen Einflüssen ist der Code als konstant für einen gegebenen Organismus anzusehen. Es ist daher sinnvoll, den Code von verschiedenen im System entfernten Organismen zu vergleichen. Wie es zuvor erwähnt worden ist, ist der Code universell. Es ist jedoch unbekannt, ob dies daran, daß irgendeine strukturelle Beziehung zwischen Aminosäure und Anticodon auf der t-RNA bestehen muß, oder daran liegt, daß Mutationen, die zu Sinnänderungen im Code führen, aufgrund ihrer Wirkung auf die gesamte Proteinsynthese des Organismus nahezu immer tödlich sind und deshalb in der Evolution nicht zur Wirkung kommen.

Der direkte Weg zum Beantworten der vorhergehenden Fragen bestünde einfach in dem Vergleich einer bekannten Aminosäuresequenz mit der zugehörigen Nukleotidsequenz. Aufgrund der technischen Schwierigkeiten bei der Sequenzanalyse ist ein derartiger Vergleich jedoch ungeachtet intensiver Bemühungen derzeit immer noch nicht möglich. Dennoch konnten alle vorhergehenden Fragen beantwortet werden. Das Durchführen und Deuten der entscheidenden Experimente zum Beantworten der vorhergehenden Fragen beruht auf der Kenntnis über den biochemischen Ablauf der Proteinsynthese.

Es folgt die Beschreibung des Mechanismus der Proteinsynthese.

Bei der Proteinsynthese gibt es zwei wesentliche Vorgänge, das heißt die Transkription und die Translation.

Bei der Transkription wird die genetische Information der DNA im Nukleus auf die m-RNA übertragen. Dieser Vorgang ist der Replikation der DNA ähnlich. Die beiden Stränge des DNA-Doppelstrangs lösen sich örtlich voneinander und die nunmehr ungepaarten Basen treten mit komplementären Ribonukleotiden in Wechselwirkung, die dann durch ein Enzym, das heißt die RNA-Polymerase, miteinander verknüpft werden. Das somit neu gebildete Polynukleotid löst sich von der DNA und wandert als einsträngiges Molekül aus dem Nukleus in das Cytoplasma. Die in der Nukleotidsequenz der DNA enthaltene Information ist also in der Nukleotidsequenz der m-RNA enthalten und dadurch transportierbar.

Bei der Translation im Cytoplasma fädeln sich Ribosomen auf der m-RNA auf. Aminosäuren werden im Cytoplasma an eine t-RNA gebunden. Diese "beladenen" t-RNA-Moleküle weisen die Fähigkeit auf, daß sie mit drei ihrer Basen, das heißt dem Anticodon, in Wechselwirkung mit der m-RNA treten können und so den in dem Codon enthaltenen Code ablesen können. Genauer gesagt werden die an die t-RNA-Moleküle gebundenen Aminosäuren an den Ribosomen zu Polypeptidketten verknüpft. Die t-RNA-Moleküle weisen also die Funktion eines Dolmetschers auf, der die Sprache der DNA, das heißt eine Sequenz von Basen, in die Sprache der Proteine, das heißt eine Sequenz von Aminosäuren, übersetzt.

Nachstehend erfolgt die Beschreibung des Aufbaus und der Funktionsweise des Ausführungsbeispiels der vorliegenden Erfindung.

Erfindungsgemäß wurde erkannt, daß in vielen Anwendungsfällen sinnvoll zu beschreibende Objekte in Datenstrukturen, das heißt Gruppierungen von Einzeldaten, oft sehr schwer automatisch vorzunehmen sind. Sie können heterogen sein, es kann eine sehr aufwendige Semantik erforderlich sein, um zu beschreiben, welche Einzeldaten einer Datenstruktur zu einem bestimmten Objekt gehören, und/oder es unterscheiden sich Kriterien, die es zulassen, daß Objekte extrahiert werden können, zwischen unterschiedlichen Objektklassen in der gleichen Datenstruktur. Zum Beispiel wird mit dem nachstehend beschriebenen Verfahren eine Extrapolationsmöglichkeit geschaffen, die es zuläßt, daß Informationen, die nicht direkt in erfaßten Daten enthalten sind, ergänzt werden können.

Ferner werden viel umfangreichere Informationen verwendet, um Entscheidungen zu treffen, als nur Informationen, die durch ein Strukturobjekt für sich alleine wiedergegeben werden können. Vielmehr sind es sehr häufig die Relationen oder Beziehungen, die eine Entscheidung überhaupt erst ermöglichen. Eine derartige Beziehung kann zum Beispiel eine Einbettung in eine bestimmte Umgebung, eine Lagebeziehung, die Beziehung bestimmter Eigenschaften eines Objekts zu anderen Objekten oder eine Zusammensetzung von bestimmten Teilbereichen sein.

Demgemäß erfolgen in dem nachstehend beschriebenen Verfahren Verarbeitungsschritte nicht alleine nach globalen Kriterien, sondern werden diese auch spezifisch und lokal vorgenommen. Lokale Verarbeitung wird dabei durch Strukturobjekte, das heißt, die objekthafte Repräsentation eines Bereichs der Datenstrukturen ermöglicht.

Erst über derartige Strukturobjekte, die stellvertretend einen ganz bestimmten Bereich der Datenstrukturen repräsentieren, können Entscheidungen und Prozessierungen bzw. Verarbeitungen lokal spezifisch durchgeführt werden. Zum Beispiel können Bereiche in Beziehung zueinander gebracht werden, indem Eigenschaften jeweiliger Strukturobjekte verglichen werden. Schließlich ist es möglich, über eine Klassifikation von Strukturobjekten lokal und spezifisch zu arbeiten.

Die vorhergehenden Ausführungen werden aus der nachstehenden detaillierten Beschreibung des Ausführungsbeispiels der vorliegenden Erfindung deutlicher ersichtlich.

Ein wesentliches Merkmal des nachfolgend beschriebenen Verfahrens ist die formal unabhängige Betrachtung eines Netzes, das aus semantischen Wissenseinheiten besteht und die für eine Analyse und Prozessierung notwendige Wissensbasis enthält, und von hierarchischen Netzen von semantischen Struktureinheiten, in denen die in den zu bearbeitenden Datenstrukturen enthaltene Information (Einzeldaten) mittels Strukturobjekten in unterschiedlicher Auflösung gleichzeitig und darüber hinaus vernetzt vorliegt.

Für eine Prozessierung der in Datenstrukturen enthaltenen Information werden die Netze von semantischen Struktureinheiten und das Netz von semantischen Wissenseinheiten immer wieder in gleicher oder unterschiedlicher Weise miteinander verschränkt. Um eine Beziehung zwischen verschiedenen Datenstrukturen zu erzielen, werden ferner unterschiedlichen Datenstrukturen zugehörige Netze von semantischen Struktureinheiten mittels eines Koppelnetzes miteinander verschränkt.

Ein wesentliches Merkmal des nachfolgend beschriebenen Verfahrens ist daher die Art von semantischen Einheiten, aus denen die semantischen Netze aufgebaut werden, die entsprechenden Netzstrukturen, und wie Information verarbeitet werden muß, damit derartige Netze und die in ihnen enthaltenen Einheiten erzeugt, verändert und informationell genutzt werden können.

Um die Struktur der in dieser Anmeldung verwendeten semantischen Netze zu verdeutlichen, werden nachstehend zuerst die "Bausteine" eines semantischen Netzes, die semantischen Einheiten erläutert. Semantische Einheiten dienen der Aufnahme von Informationsinhalten und es gibt bei diesem Verfahren im wesentlichen sechs unterschiedliche Grundtypen von semantischen Einheiten, das heißt Strukturobjekte, Verknüpfungsobjekte, Klassenobjekte, Analyseobjekte, Prozessierungsobjekte und Merkmalsobjekte.

Strukturobjekte sind entweder jeweils eindeutig an einen bestimmten Bereich einer Datenstruktur gebunden und repräsentieren diesen und/oder Eigenschaften von ihm oder sie sind nicht oder nicht ausschließlich an einen bestimmten Bereich der Datenstruktur gebunden, sondern ergänzen eine in einer Datenstruktur nicht direkt enthaltene Information.

Verknüpfungsobjekte verknüpfen jeweils zwei beliebige semantische Einheiten derart miteinander, daß die Art und der Informationsinhalt eines jeweiligen Verknüpfungsobjekts die Beziehung der zwei semantischen Einheiten zueinander bestimmt.

Klassenobjekte repräsentieren eine Klasse und wenden insbesondere mit ihnen verknüpfte Analyseobjekte und/oder Prozessierungsobjekte auf semantische Einheiten an. Mittels der Klassenobjekte können semantische Einheiten - analysiert, klassifiziert, unterschieden, einer Klasse zugeordnet und/oder selbst oder bestimmte Teilnetze verändert werden. Ein Klassenobjekt kann auch Attribute auf ihm zugeordnete semantische Einheiten übertragen. Klassenobjekte stellen die Grundeinheit für den immer wieder auf das Neue stattfindenden Zyklus "Analyse-Entscheidung-Prozessierung" dar.

Analyseobjekte beinhalten durch Verknüpfung zu Merkmalsobjekten Auswertealgorithmen, mit denen sie diejenigen semantischen Einheiten, mit denen sie verknüpft sind, und/oder bestimmte Teilnetze, zum Beispiel die jeweilige vernetzte Umgebung, analysieren. Analyseobjekte sind insbesondere an Klassenobjekte gebunden und werden auf diejenigen semantischen Einheiten angewendet, mit denen das jeweilige Klassenobjekt analysierend verbunden ist.

Prozessierungsobjekte beinhalten jeweils. Prozessierungsalgorithmen, mit denen sie diejenigen semantischen Einheiten, mit denen sie verknüpft werden, und/oder bestimmte Teilnetze, zum Beispiel die jeweilige vernetzte Umgebung, verändern, sowie Ablaufsteuerungen bezüglich dieser Algorithmen. Prozessierungsobjekte sind insbesondere an Klassenobjekte gebunden und werden auf diejenigen semantischen Einheiten angewendet, mit denen das jeweilige Klassenobjekt prozessierend oder eventuell zuordnend verbunden ist.

Merkmalsobjekte enthalten Merkmalsbeschreibungen und Auswertealgorithmen zum Zwecke von lokalen Analysen. Derartige Merkmale und Auswertealgorithmen beinhalten zum Beispiel Attribute oder Schablonen.

Semantische Einheiten weisen einen Informationsinhalt auf. Dieser Informationsinhalt untergliedert sich in die drei Bereiche der Kennzeichnung bzw. der eindeutigen Adressierung (ID), der Daten und Funktionen der semantischen Einheit (DF) und der Auflistung aller Verknüpfungsobjekte, die eine jeweilige semantische Einheit mit anderen semantischen Einheiten verbinden. Die Auflistung der Verknüpfungsobjekte in einer semantischen Einheit kann zum Beispiel auch in einer gegliederten Form vorliegen, so daß die durch Verknüpfungsobjekte realisierten Beziehungen inhaltlich geordnet sind.

Der Begriff der semantischen Stuktureinheiten faßt Strukturobjekte, deren Verknüpfungen untereinander und Netze/Teilnetze von semantischen Struktureinheiten zusammen. Der Begriff der semantischen Wissenseinheiten faßt Merkmalsobjekte, Analyseobjekte, Prozessierungsobjekte, Klassenobjekte und deren Verknüpfungen untereinander zusammen.

Ein wesentlicher Begriff ist der Begriff eines "bestimmten Teilnetzes", unter dem hier und im weiteren Verlauf alle weiteren semantischen Struktureinheiten eines bestimmten Typus und/oder einer bestimmten Klassifikation in einer bestimmten Entfernung zu verstehen sind, die ausgehend von einer oder mehreren bestimmten - semantischen Struktureinheiten direkt oder indirekt über andere semantischen Einheiten mit diesen verknüpft sind. Bei einem "bestimmten Teilnetz" kann es sich insbesondere auch um die vernetzte Umgebung einer semantischen Struktureinheit handeln.

Eine erste semantische Einheit wird zum Beispiel dann als einer vernetzten Umgebung einer zweiten semantischen Einheit zugehörig definiert, wenn eine Entfernung zwischen diesen kleiner als ein vorgegebener oder berechneter Wert, das heißt ein Grenzwert, ist. Dabei hängt ein Maß der Entfernung von Informations- und/oder Bedeutungsinhalten der semantischen Einheiten ab, über die die zweite semantische Einheit von der ersten semantischen Einheit aus erreichbar ist. Zum Beispiel ist es möglich, das Maß der Entfernung mit Gewichtungen in Verknüpfungsobjekten zu berechnen, wobei in diese Berechnung ebenso der Typus des Verknüpfungsobjekts eingehen kann.

Eine derartige gewichtete Verknüpfung wird zum Beispiel durch Eintragen einer Gewichtung in den Informationsinhalt einer semantischen Einheit realisiert. Die vernetzte Umgebung wird dann derart definiert, daß ausgehend von einer semantischen Einheit alle anderen direkt oder indirekt mit dieser semantischen Einheit verknüpften semantischen Einheiten zu der vernetzten Umgebung dieser semantischen Einheit gehören, die bei einem Aufmultiplizieren der Gewichtungen entlang des Verknüpfungswegs erreichbar sind, ohne daß ein vorbestimmter Schwellenwert über- bzw. unterschritten wird.

Wie es bereits zuvor erwähnt worden ist, verknüpfen Verknüpfungsobjekte semantische Einheiten untereinander. Verknüpfungsobjekte sind eine wichtige Voraussetzung, um eine Semantik zu modellieren und zu verarbeiten. Im einfachsten Fall ist ein Verknüpfungsobjekt eine Kennzeichnung bzw. ID, ein Zeiger bzw. Pointer oder eine logische Verknüpfung.

Die Art eines Verknüpfungsobjekts ist wesentlich verantwortlich für die Qualität einer Verknüpfung. Die Art eines Verknüpfungsobjekts ist durch eine Bezeichnung des Verknüpfungsobjekts in dem jeweiligen Informationsinhalt und/oder durch den Ort oder die Auflistung in einer semantischen Einheit festgelegt, mit der das Verknüpfungsobjekt verbunden ist. Bestimmte Typen von Verknüpfungsobjekten kennzeichnen jeweils ein Teilnetz bzw. einen Teilraum in einem fraktalen Netz mit hierarchischer Struktur.

Die durch verknüpfungsobjekte realisierte Beziehung von zwei semantischen Einheiten muß nicht symmetrisch, das heißt in beide Richtungen eineindeutig, sein, wie zum Beispiel eine Beziehung "ist Nachbar von", sondern ist in den meisten Fällen vielmehr unsymmetrisch, daß heißt in beide Richtungen eindeutig, wie zum Beispiel eine Beziehung "ist Unterobjekt von" und "ist Oberobjekt von".

Es ist darauf hinzuweisen, daß verknüpfungsobjekte wiederum über weitere Verknüpfungsobjekte verknüpft sein können. Dies führt zu einer allgemeinen fraktalen Struktur des Netzes. Im einzelnen können also semantische Einheiten über Verknüpfungsobjekte mit semantischen Einheiten verknüpft sein, können semantische Einheiten über Verknüpfungsobjekte mit Verknüpfungsobjekten verknüpft sein und können Verknüpfungsobjekte über Verknüpfungsobjekte mit Verknüpfungsobjekten verknüpft sein. Dies führt zu einer fraktalen Struktur eines semantischen Netzes.

Die wichtigsten Typen von Verknüpfungsobjekten werden nachstehend detaillierter beschrieben.

Ein Verknüpfungsobjekt von Typus VS verknüpft Strukturobjekte miteinander.

Ein Verknüpfungsobjekt vom Typus VSH verknüpft Strukturobjekte hierarchisch miteinander und stellt eine unsymmetrische Verknüpfung dar, die zwischen Ober-Strukturobjekten und Unter-Strukturobjekten unterscheidet.

Ein Verknüpfungsobjekt vom Typus VSN verknüpft benachbarte Strukturobjekte miteinander und stellt eine symmetrische Verknüpfung dar. Unter dem Begriff "benachbart" sind hierbei Strukturobjekte der gleichen Hierarchiebene in dem hierachischen Netz von Strukturobjekten zu verstehen.

Ein Verknüpfungsobjekt vom Typus VK stellt eine Klassenverknüpfung dar, die eine semantische Einheit mit einem Klassenobjekt verknüpft.

Ein Verknüpfungsobjekt vom Typus VKA stellt eine klassifizierende Verknüpfung dar, die einen in einem mit einem jeweiligen Klassenobjekt verknüpften Analyseobjekt enthaltenen Auswertealgorithmus auf semantische - Struktureinheiten und/oder bestimmte Teilnetze anwendet.

Ein Verknüpfungsobjekt vom Typus VKZ stellt eine zuordnende Klassenverknüpfung dar, die eine semantische Einheit einem Klassenobjekt und damit der durch das Klassenobjekt repräsentierten Klasse zuordnet. Ihre Bedeutung kann als "ist im allgemeinen" und "ist im speziellen" ausgedrückt werden, wodurch sie gleichbedeutend zu einem Verknüpfungsobjekt vom Typus VSH ist, die bereits erläutert worden ist. Ein Verknüpfungsobjekt vom Typus VKZ kann Attribute von dem jeweiligen Klassenobjekt auf die verknüpft semantische Einheit übertragen.

Ein Verknüpfungsobjekt vom Typus VKP stellt eine verarbeitende bzw. prozessierende Klassenverknüpfung dar, die einen in einem mit einem jeweiligen Klassenobjekt verknüpften Prozessierungsobjekt enthaltenen Prozessierungsalgorithmus auf die semantische Einheit und/oder bestimmte Teilnetze anwendet.

Ein Verknüpfungsobjekt vom Typus VÄ stellt eine Ähnlichkeitsverknüpfung dar, die Klassenobjekte entlang einer Ähnlichkeit von Merkmalsbeschreibungen hinsichtlich Analyseobjekten oder von Prozessierungsalgorithmen hinsichtlich Prozessierungsobjekten untereinander verknüpft, wodurch eine Ähnlichkeitshierarchie von Klassenobjekten erzeugt wird.

Ein Verknüpfungsobjekt vom Typus VÄH stellt eine hierarchische Ähnlichkeitsverknüpfung dar, die Klassenobjekte hierarchisch miteinander verknüpft und Verknüpfungen zu Analyseobjekten, Attributen und/oder Prozessierungsobjekten von Ober-Klassenobjekten zu Unter-Klassenobjekten vererbt.

Ein Verknüpfungsobjekt vom Typus VÄHA stellt eine hierarchische Ähnlichkeitverknüpfung bezüglich Merkmalsbeschreibungen hinsichtlich Analyseobjekten dar, die Verknüpfungen zu Analyseobjekten von Ober-Klassenobjekten zu Unter-Klassenobjekten vererbt.

Ein Verknüpfungsobjekt vom Typus VÄHJ stellt eine hierarchische Ähnlichkeitverknüpfung bezüglich Prozessierungsalgorithmen hinsichtlich Prozessierungsobjekten dar, die Verknüpfungen zu Prozessierungsobjekten von Ober-Klassenobjekten zu Unter-Klassenobjekten vererbt.

Ein Verknüpfungsobjekt vom Typus VÄN stellt eine nachbarschaftliche Ähnlichkeitsverknüpfung dar, die insbesondere derartige Klassenobjekte miteinander verknüpft, die über ein jeweiliges Verknüpfungsobjekt vom Typus VÄH mit dem gleichen Ober-Klassenobjekt verbunden sind und daher gleiche Merkmalsbeschreibungen hinsichtlich Analyseobjekten, Attributen und/oder Prozessierungsalgorithmen hinsichtlich Prozessierungsobjekten erben und in dieser Hinsicht als ähnlich betrachtet werden.

Ein Verknüpfungsobjekt vom Typus VÄNA stellt eine nachbarschaftliche Ähnlichkeitsverknüpfung bezüglich Merkmalsbeschreibungen hinsichtlich Analyseobjekten dar.

Ein Verknüpfungsobjekt vom Typus VÄNJ stellt eine nachbarschaftliche Ähnlichkeitsverknüpfung bezüglich Prozessierungsalgorithmen hinsichtlich Prozessierungsobjekten dar.

Ein Verknüpfungsobjekt vom Typus VG stellt eine Gruppierungsverknüpfung dar, die Klassenobjekte hinsichtlich ihrer semantischen Bedeutung miteinander verknüpft und sie gruppiert, wodurch eine Bedeutungshierarchie bzw. Gruppierungshierarchie von Klassenobjekten erzeugt wird.

Ein Verknüpfungsobjekt vom Typus VGH stellt eine hierarchische Gruppierungsverknüpfung dar, die Klassenobjekte hierarchisch untereinander verknüpft, wobei die semantische Bedeutung nach oben in der Hierarchie "ist im allgemeinen" und nach unter in der Hierarchie "ist im speziellen" ist. Dieses Verknüpfungsobjekt ist dahingehend mit einem Verknüpfungsobjekt vom Typus VKZ verwandt, daß anstelle eines Strukturobjekts, wie dies bei dem Verknüpfungsobjekt vom Typus VKZ der Fall ist, hier ein Klassenobjekt einem anderen Klassenobjekt als Unter-Klassenobjekt zugeordnet wird.

Ein Verknüpfungsobjekt vom Typus VGN stellt eine nachbarschaftliche Gruppierungsverknüpfung dar, die Klassenobjekte ähnlicher semantischer Bedeutung nachbarschaftlich, das heißt auf der gleichen Hierarchieebene, miteinander verknüpft.

Ein Verknüpfungsobjekt vom Typus VM stellt eine Merkmalsverknüpfung dar, die Analyseobjekte und Merkmalsobjekte untereinander verknüpft und in den Merkmalsobjekten enthaltene Merkmalsbeschreibungen und Auswertealgorithmen auf die semantischen Struktureinheiten anwendet, die mit einem jeweiligen Analyseobjekt verbunden sind.

Ein Verknüpfungsobjekt vom Typus VÄG stellt eine gruppierende Ähnlichkeitsverknüpfung dar, die die Eigenschaften und Funktionen sowohl des Verknüpfungsobjekts vom Typus VÄ als auch des Verknüpfungsobjekts vom Typus VG aufweist.

Ein Verknüpfungsobjekt vom Typus VÄGH stellt eine hierarchische gruppierende Ähnlichkeitsverknüpfung dar, die die Eigenschaften und Funktionen sowohl des Verknüpfungsobjekts vom Typus VÄG als auch des Verknüpfungsobjekts vom Typus VGH aufweist.

Ein Verknüpfungsobjekt vom Typus VÄGHA stellt eine hierarchische gruppierende Ähnlichkeitsverknüpfung dar, die die Eigenschaften und Funktionen sowohl des Verknüpfungsobjekts vom Typus VÄHA als auch des Verknüpfungsobjekts vom Typus VGH aufweist.

Ein Verknüpfungsobjekt vom Typus VÄGHJ stellt eine hierarchische gruppierende Ähnlichkeitsverknüpfung dar, die die Eigenschaften und Funktionen sowohl des Verknüpfungsobjekts vom Typus VÄHJ als auch des Verknüpfungsobjekts vom Typus VGH aufweist.

Ein Verknüpfungsobjekt vom Typus VÄGN stellt eine nachbarschaftliche gruppierende Ähnlichkeitsverknüpfung dar, die die Eigenschaften und Funktionen sowohl des Verknüpfungsobjekts vom Typus VÄN als auch des Verknüpfungsobjekts vom Typus VGN aufweist.

Nachstehend erfolgt die Beschreibung der hierarchischen semantischen Netze von Struktureinheiten mittels der zuvor beschriebenen Strukturobjekte und deren Verknüpfungen.

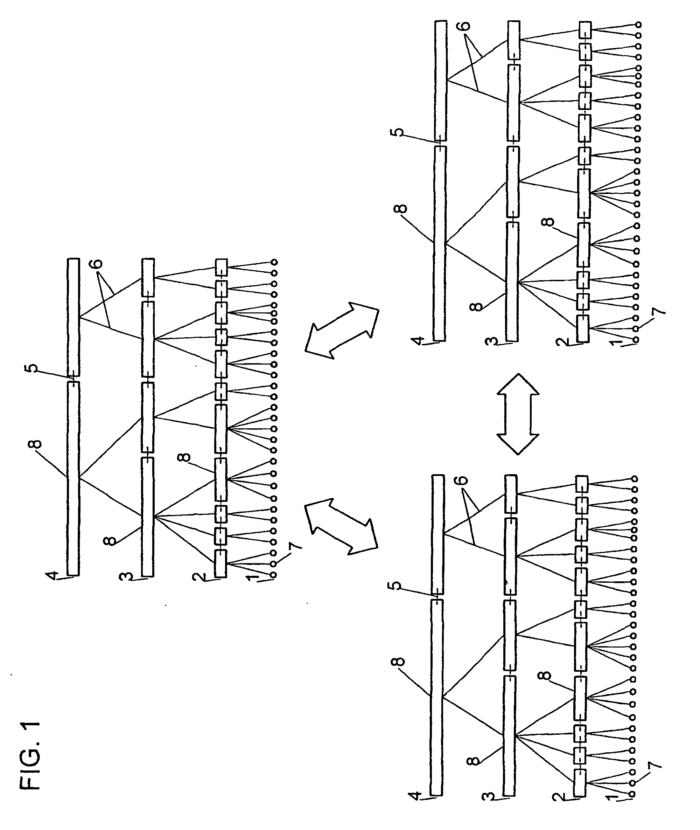

**Fig. 1** zeigt eine schematische Darstellung mehrerer gekoppelter hierarchischer Netze von Struktureinheiten gemäß einem Ausführungsbeispiel der vorliegenden Erfindung.

Wie es zuvor erwähnt worden ist, werden bei dem Ausführungsbeispiel der vorliegenden Erfindung mehrere unterschiedliche Datenstrukturen verarbeitet, die miteinander verwandt sind, das heißt Beziehungen zueinander aufweisen. In dem Fall dieses Ausführungsbeispiels werden die DNA, die RNA und Proteine betreffende Datenstrukturen verwendet.

Zuerst wird hier jedoch allgemein der Aufbau der gekoppelten hierarchischen Netze von Struktureinheiten erläutert.

In **Fig. 1** bezeichnet das Bezugszeichen 1 die unterste Hierarchieebene von jeweiligen semantischen Netzen von Struktureinheiten, bezeichnen die Bezugszeichen 2, 3 und 4 unterschiedliche Hierarchieebenen der hierarchischen semantischen Netze von Struktureinheiten, bezeichnet das Bezugszeichen 5 ein beispielhaftes Verknüpfungsobjekt vom Typus VSN, bezeichnet das Bezugszeichen 6 ein beispielhaftes verknüpfungsobjekt vom Typus VSH, bezeichnet das Bezugszeichen 7 beispielhaft ein Datenpunktobjekt und bezeichnet das Bezugszeichen 8 beispielhaft Strukturobjekte.

Wie es bereits zuvor erwähnt worden ist, sind Strukturobjekte 8 jeweils an einen Bereich der zu bearbeitenden Datenstrukturen gebunden und repräsentieren diesen. Jeder einzelne Punkt der zu bearbeitenden Datenstrukturen kann durch ein Strukturobjekt 8 oder im hierarchischen Sinne mehrere Strukturobjekte 8 repräsentiert werden. Die Strukturobjekte 8 können bezüglich der Topologie der erfaßten Datenstruktur zusammenhängend sein, müssen dies aber nicht zwingend sein.

Die Strukturobjekte 8 enthalten Daten, die die individuellen Eigenschaften eines jeweiligen Strukturobjekts 8 beschreiben, wie zum Beispiel Größe, Position, usw.

Eine weitere Information über den Kontext ist in der Auflistung der mit dem Strukturobjekt 8 verbundenen Verknüpfungsobjekte 5 und 6 in dem Informationsinhalt des Strukturobjekts 8 enthalten. Die Auflistung liegt strukturiert nach Unter-Strukturobjekten, Ober-Strukturobjekten, das heißt über ein Verknüpfungsobjekt 6 vom Typus VSH verknüpft, und Nachbar-Strukturobjekten, das heißt über ein Verknüpfungsobjekt 5 vom Typus VSN verknüpft, vor.

Dies ist aus **Fig. 1** ersichtlich. Zum Beispiel sind in der obersten Hierarchieebene 4 der hierarchischen semantischen Netze von Struktureinheiten zwei Strukturobjekte 8 mit einem verknüpfungsobjekt 5 vom Typus VSN miteinander verknüpft und sind demgemäß zueinander benachbart. Ferner ist zum Beispiel ein Strukturobjekt 8 in der obersten Hierarchieebene 4 der hierarchischen semantischen Netze von Struktureinheiten über ein Verknüpfungsobjekt 6 vom Typus VSH mit einem Strukturobjekt 8 in der nächstniedrigeren Hierarchieebene 3 des hierarchischen semantischen Netzes von Struktureinheiten verknüpft, was bedeutet, daß das Strukturobjekt 8 in der obersten Hierarchieebene 4 der hierarchischen semantischen Netze von Struktureinheiten ein Ober-Strukturobjekt des Strukturobjekts 8 in der nächstniedrigeren Hierarchieebene 3 der hierarchischen Netze von Struktureinheiten ist und umgekehrt das Strukturobjekt 8 in der nächstniedrigeren Hierarchieebene 3 der hierarchischen semantischen Netze von Struktureinheiten ein Unter-Strukturobjekt des Strukturobjekts 8 in der obersten Hierarchieebene 3 der hierarchischen Netze von Struktureinheiten ist. Wie es aus **Fig. 1** ersichtlich ist, sind in derartigen hierarchischen semantischen Netzen von Struktureinheiten eine Vielzahl derartiger Verknüpfungen anhand der Verknüpfungsobjekte 5 vom Typus VSN und der Verknüpfungsobjekte 6 vom Typus VSH vorhanden.

Ein weiterer Bestandteil von Verknüpfungsobjekten 5, 6 vom Typus VS können ferner Daten sein, die Eigenschaften einer jeweiligen Verknüpfung bezeichnen, wie zum Beispiel die Länge einer gemeinsamen Kante von Nachbar-Strukturobjekten bei einem Verknüpfungsobjekt vom Typus VSN.

Es ist anzumerken, daß bei der zuvor beschriebenen Struktur der hierarchischen Netze von Struktureinheiten verschiedene Hierarchieebenen 1 bis 4 ausgebildet werden können, wie dies in **Fig. 1** dargestellt ist, und mittels diesen verschiedenen Hierarchieebenen 1 bis 4 der Strukturobjekte 8 der Inhalt der zu bearbeitenden Datenstrukturen in unterschiedlichen Auflösungen gleichzeitig repräsentiert werden kann. Dies führt zur Hierarchie der semantischen Netze in Übereinstimmung mit topologischen Lagebeziehungen der zu bearbeitenden Datenstruktur.

Derartige hierarchische Netze von Struktureinheiten müssen keine einheitliche hierarchische Tiefe, das heißt an jeder Stelle eine gleiche Anzahl von Hierarchieebenen 1 bis 4, aufweisen und es ist nicht immer erforderlich, daß Verknüpfungsobjekte 5 vom Typus VSN in den semantischen Netzen von Struktureinheiten enthalten sind. Auch ist es nicht immer erforderlich, daß die semantischen Netze hierarchisch eindeutig sind. Dies bedeutet, daß es vorkommen kann, daß ein Unter-Strukturobjekt mehrere Ober-Strukturobjekte aufweisen kann.

Es ist jedoch anzumerken, daß ausgenommen der Datenpunktobjekte 7 ein Strukturobjekt 8 immer denjenigen Bereich der zu bearbeitenden Datenstruktur repräsentiert, der sich aus der Gesamtheit aller Bereiche zusammensetzt, die durch die jeweiligen Unter-Strukturobjekte dieses Strukturobjekts 8 repräsentiert werden. In dieser Hinsicht sind die hierarchischen semantischen Netze von Struktureinheiten eindeutig entsprechend der Topologie der zu bearbeitenden Datenstrukturen.

Obgleich in **Fig. 1** der Einfachheit halber drei gleich aufgebaute Netze von semantischen Struktureinheiten gezeigt sind, versteht es sich, daß die mehreren semantischen Netze von Struktureinheiten, in denen mehrere unterschiedliche Datenstrukturen abgebildet werden, in der Regel, je nach Inhalt der jeweiligen Datenstrukturen unterschiedlich aufgebaut sind. Um einen Zusammenhang zwischen den jeweiligen Datenstrukturen bei der Verarbeitung einfließen zu lassen, werden die semantischen Netze von Struktureinheiten über ein Koppelnetz miteinander vernetzt, wie dies in **Fig. 1** mittels den drei Doppelpfeilen angedeutet ist. Derartige Vernetzungen zwischen den semantischen Netzen von Struktureinheiten können in beide Richtungen wirken.

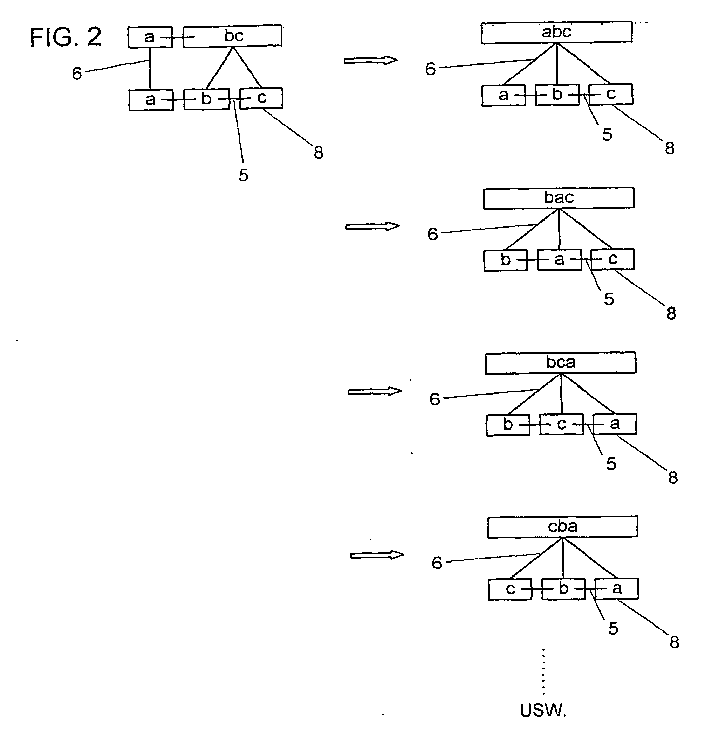

Unter Bezugnahme auf die **Figuren 2 bis 10** werden im weiteren Verlauf lokale Operationen beschrieben, die innerhalb der hierarchischen semantischen Netze von Struktureinheiten durchgeführt werden können.

Obgleich nachstehend einige Beispiele auf bestimmten Hierarchieebenen der semantischen Netze von Struktureinheiten gegeben werden, ist anzumerken, daß diese lokalen Operationen sowohl zwischen allen Hierachieebenen als auch zwischen den mehreren Netzen von semantischen Struktureinheiten selbst, das heißt in dem Koppelnetz, stattfinden können.

Nachstehend wird von einem Aufbau von drei Netzen von semantischen Struktureinheiten ausgegangen, die genetische Datenstrukturen verarbeiten. Genauer gesagt wird von einem DNA-Netz von semantischen Struktureinheiten, einem RNA-Netz von semantischen Struktureinheiten und einem Proteinnetz von semantischen Struktureinheiten ausgegangen, von denen jedes mit dem Netz von semantischen Wissenseinheiten verschränkt ist. Zwischen diesen drei Netzen von semantischen Struktureinheiten wird das Koppelnetz ausgebildet, um Verarbeitungen zwischen den mehreren unterschiedlichen Datenstrukturen, das heißt DNA-, RNA- und Protein-Datenstrukturen sowie deren jeweiligen Ober-Objekten und Unter-Objekten, zuzulassen.

Die Hierarchie in den DNA- und RNA-Netzen von semantischen Struktureinheiten von der untersten Hierarchieebene zu der höchsten Hierarchieebene ist dabei zum Beispiel wie folgt: Nukleotide, Codogens (DNA) bzw. Codons (RNA), das heißt Nukleotidtripletts, Gruppen von Codogens bzw. Codons und deren Beziehungen untereinander, Operons, Gruppen von Operons und deren Beziehungen untereinander, Chromosomen, Gruppen von Chromosomen und deren Beziehungen untereinander, Gene und Gruppen von Genen und deren Beziehungen untereinander, DNA bzw. RNAs, Gruppen von DNAs bzw. RNAs einer Art und deren Beziehungen untereinander, Genoms, Gruppen von Genoms und deren Beziehungen untereinander. Weitere Struktureinheiten sind die Beziehungen bzw. verknüpfungsobjekte, die Struktureinheiten auf der gleichen Hierarchieebene als Nachbarobjekte und Struktureinheiten auf unterschiedlichen Hierarchieebenen als Unter-Objekte oder Ober-Objekte miteinander verknüpfen.

Die Hierarchie in dem Protein-Netz von semantischen Struktureinheiten von der untersten Hierarchieebene zu der höchsten Hierarchieebene ist dabei zum Beispiel wie folgt: Aminosäuren, Gruppen von Aminosäuren und deren Beziehungen untereinander und Proteine und Gruppen von Proteinen und deren Beziehungen untereinander. Weitere Struktureinheiten sind die Beziehungen bzw. Verknüpfungsobjekte, die Struktureinheiten auf der gleichen Hierarchieebene als Nachbarobjekte und Struktureinheiten auf unterschiedlichen Hierarchieebenen als Unter-Objekte oder Ober-Objekte miteinander verknüpfen.

Wichtig ist, daß die Größe bzw. Reihenfolge und die Position innerhalb einer Anordnung von Objekten eine wesentliche Rolle dabei spielt, welche Eigenschaften ein jeweiliges Objekt aufweist, wie es nachstehend deutlicher wird.

**Fig. 2** zeigt eine lokale Operation "Fusion" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Fusion" werden zwei oder mehrere bereits vorhandene in der linken Darstellung von **Fig. 2** gezeigte Strukturobjekte 8 fusioniert bzw. zu einem neuen Strukturobjekt 8 verschmolzen, wie dies aus der rechten Darstellung von **Fig. 2** ersichtlich ist.

In **Fig. 2** ist die untere Hierarchieebene die Hierarchieebene der Codons und ist die obere Hierarchieebene die Ebene der Gene. In der linken Darstellung von **Fig. 2** sind also Codons a, b und c und Gene a und bc dargestellt. In **Fig. 2** fusionieren das Gen a und bc miteinander, um ein neues Gen aus den drei Codons a, b und c zu bilden. Hier spielt die Reihenfolge der Codons in dem neu gebildeten Gen eine wesentliche Rolle. Von oben nach unten auf der rechten Seite in **Fig. 2** sind vier derartige Beispiele dargestellt:
Gen abc: Codons a, b und c ist nicht
Gen bac: Condons b, a und c ist nicht
Gen bca: Codons b, c und a ist nicht
Gen cba: Codons c, b und a ist nicht
usw. für alle möglichen Kombinationen.

Die Nachbarschaft innerhalb einer Hierarchieebene wird durch einer Reihenfolge innerhalb einer Nachbarschaftsliste definiert.

Im folgenden wird ein weiteres Beispiel der lokalen Operation "Fusion" auf anderen Hierarchieebenen gegeben:
Codon abc: Nukleotide a, b und c ist nicht
Codon bac: Nukleotide b, a und c ist nicht
Codon bca: Nukleotide b, c und a ist nicht
Codon cba: Nukleotide c, b unda ist nicht
usw. für alle möglichen Kombinationen.

Es ist also zu sehen, daß die Reihenfolge der Nukleotide, das heißt der Unter-Objekte, innerhalb einer Liste in einer Gruppe bzw. eines Codons, das heißt der Ober-Objekte, eine Identität eines jeweiligen Ober-Objekts bestimmt. Diese Reihenfolge wirkt sich ebenso zwischen den jeweiligen hierarchischen Netzen von semantischen Struktureinheiten aus und wirkt sich zum Beispiel bis in das Protein-Netz von semantischen Struktureinheiten hinein bei der Proteinsynthese aus. Die Wirkung geht also über die eigene Datenstruktur hinaus.

Wie es aus den vorhergehenden Ausführungen ersichtlich ist, bestimmt die Reihenfolge der Unter-Objekte im wesentlichen die Reihenfolge der Ober-Objekte und damit die Identität der gesamten Datenstruktur. Dies gilt für alle nachstehend beschriebenen lokalen Operationen.

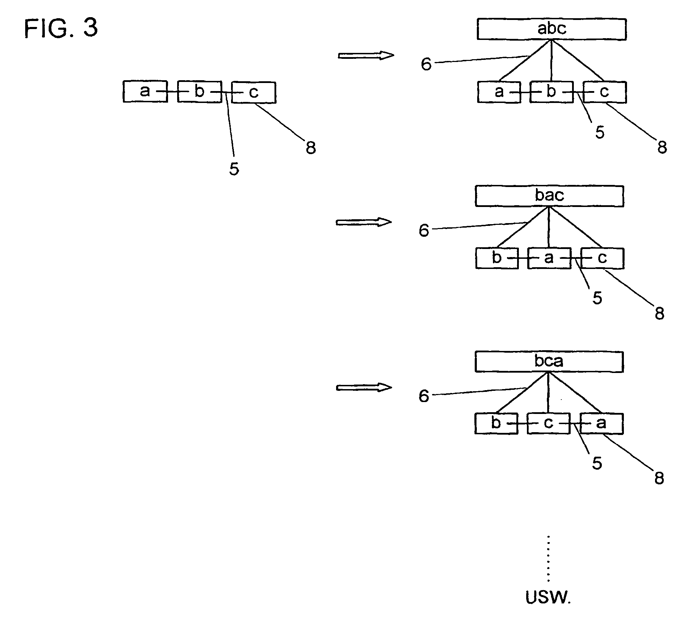

**Fig. 3** zeigt eine lokale Operation "Gründen" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Gründen" wird für ein oder mehrere in der linken Darstellung von **Fig. 3** gezeigte Strukturobjekte 8 ein neues Strukturobjekt 8 als neues Ober-Strukturobjekt erzeugt und mit diesen über Verknüpfungsobjekte 5 vom Typus VSH verknüpft, wie dies aus den rechten Darstellungen von **Fig. 3** ersichtlich ist.

Von oben nach unten auf der rechten Seite in **Fig. 3** sind vier derartige Beispiele dargestellt:
Codon a, b und c gründen Gen abc oder
   Gen bac oder
   Gen bac oder
usw. für alle möglichen Kombinationen.

Hier ist es ebenso ersichtlich, daß die Reihenfolge der Unter-Objekte, das heißt Codons, innerhalb einer Liste der Unter-Objekte wesentlich zur Identität des enstehenden Gens beiträgt.

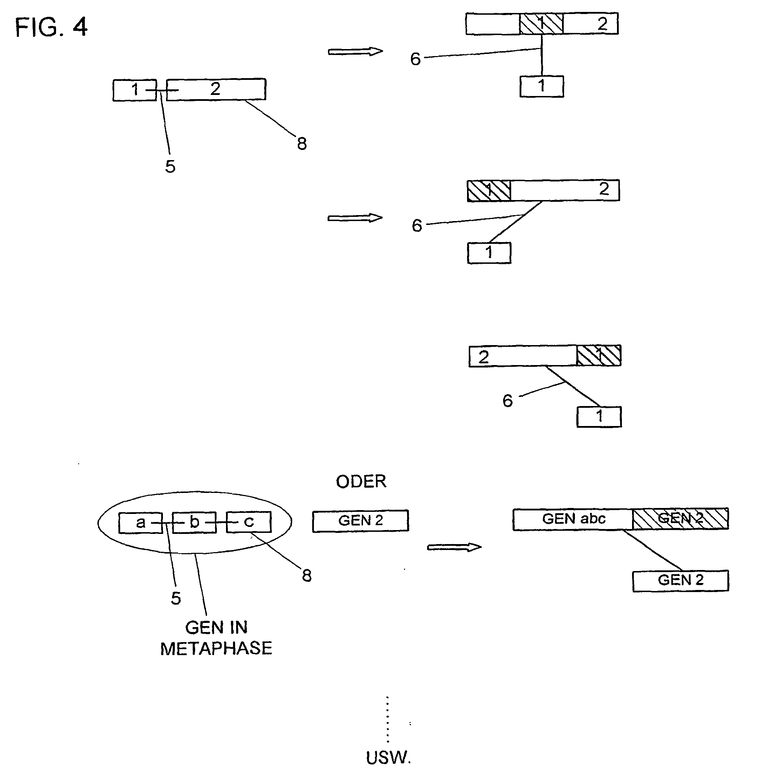

**Fig. 4** zeigt eine lokale Operation "Einhängen eines Nachbarn als Unter-Strukturobjekt" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Einhängen eines Nachbarn als Unter-Strukturobjekt" wird ein vorhandenes Verknüpfungsobjekt 5 vom Typus VSN zwischen benachbarten Strukturobjekten 8 aufgelöst und ein neues Verknüpfungsobjekt 6 vom Typus VSH zwischen diesen erzeugt, wodurch ein bisheriges Nachbar-Strukturobjekt einem Strukturobjekt 8 als Unter-Strukturobjekt zugeordnet wird und sich in Übereinstimmung damit der dem Strukturobjekt 8 zugehörige Bereich der zu bearbeitenden Datenstruktur vergrößert.

Wie es in **Fig. 4** dargestellt ist, trifft zum Beispiel während einer Klassifikation ein Gen 2 auf ein Codon 1. Dabei wird das Codon 1 dem Gen 2 als Unter-Strukturobjekt untergeordnet. Die Eigenschaften und die Identität des entstehenden Ober- bzw. Unterobjekts sind zum großen Teil von der Position des Unter-Objekts innerhalb des Ober-Objekts bestimmt, wie dies durch die gestrichelten Positionen des Codons 1 in dem Gen 2 angedeutet ist. Befindet sich das Unetr-Objekt an der ersten, zweiten, dritten usw. Position des Ober-Objekts, so entstehen vollkommen unterschiedliche Ober-Objekte mit unterschiedlichen Eigenschaften und unterschiedlichen Identitäten, welche über die gesamten Netze von semantischen Struktureinheiten, also über DNA zu RNA und Proteine und umgekehrt, ihre Auswirkungen aufweisen.

In dem anderen in **Fig. 4** dargestellten Beispiel trifft das Gen 2 während einer Klassifikation auf eine Gruppe von Codons abc. Dabei wird das Gen 2 der Gruppe von Codons abc als Unter-Strukturobjekt untergeordnet und wird ferner die Gruppe von Codons abc zu dem Gen 2 klassifiziert, wodurch sich ein neues Ober-Strukturobjekt aus dem Gen 2 und der Gruppe von Codons abc ergibt.

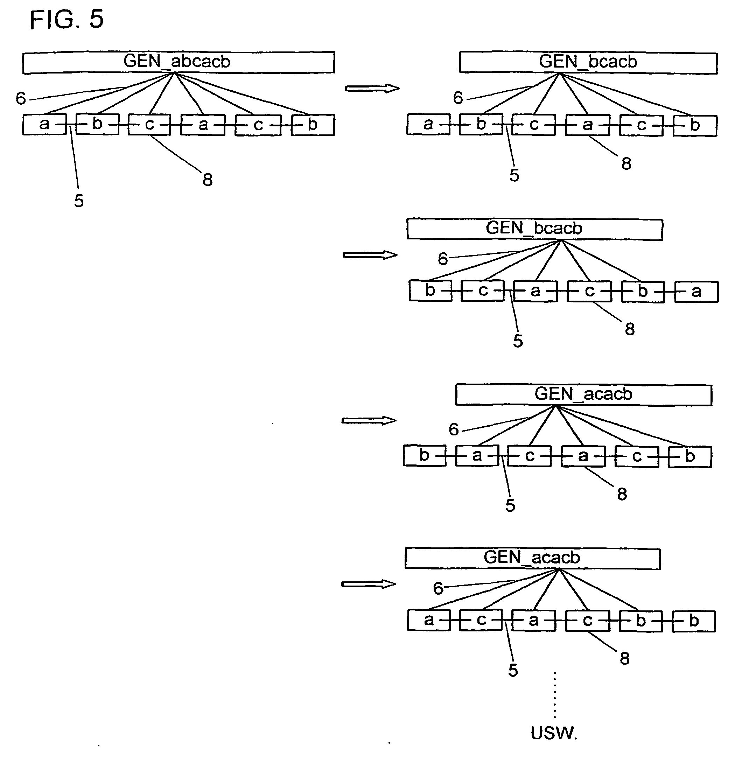

**Fig. 5** zeigt eine lokale Operation "Ausgliedern" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Ausgliedern" wird ein vorhandenes Verknüpfungsobjekt 6 vom Typus VSH zwischen Unter-Strukturobjekt und einem Ober-Strukturobjekt aufgelöst, wodurch das bisherige Unter-Strukturobjekt ausgegliedert wird und sich in Übereinstimmung damit der dem Strukturobjekt 8 zugehörige Bereich der zu bearbeitenden Datenstruktur verkleinert.

Wie es in **Fig. 5** gezeigt ist, weist ein Gen abcacb die Codons a, b, c, a, c und b als Unter-Strukturobjekte auf. Aus dieser Gruppe von Codons kann jedes Codon ausgegliedert werden. Was sich nach dem Ausgliedern für ein Gen als Ober-Strukturobjekt ergibt, hängt davon ab, welcher der Codons ausgegliedert wird. Ausgegliedert können auch ganze Gruppen von Unter-Strukturobjekten werden, wobei auch hier die Position der Gruppe der Codons innerhalb eines jeweiligen Gens eine Rolle spielt.

In **Fig. 5** wird im ersten Fall das erste Codon a aus dem Gen abcacb ausgegliedert und befindet sich nach dem Ausgliedern vor den dem Gen als Unter-Strukturobejkten zugehörigen Codons, wodurch sich als neues Ober-Strukturobjekt das Gen bcacb ergibt.

In **Fig. 5** wird im zweiten Fall das erste Codon a aus dem Gen abcacb ausgegliedert und befindet sich nach dem Ausgliedern hinter den dem Gen als Unter-Strukturobejkten zugehörigen Codons, wodurch sich als neues Ober-Strukturobjekt das Gen bcacb ergibt.

In **Fig. 5** wird im dritten Fall das zweite Codon b aus dem Gen abcacb ausgegliedert und befindet sich nach dem Ausgliedern vor den dem Gen als Unter-Strukturobejkten zugehörigen Codons, wodurch sich als neues Ober-Strukturobjekt das Gen acacb ergibt.

In **Fig. 5** wird im vierten Fall das zweite Codon b aus dem Gen abcacb ausgegliedert und befindet sich nach dem Ausgliedern hinter den dem Gen als Unter-Strukturobjekten zugehörigen Codons, wodurch sich als neues Ober-Strukturobjekt das Gen acacb ergibt.

Neben den in **Fig. 5** gezeigten Beispielen sind alle weiteren Möglichkeiten denkbar.

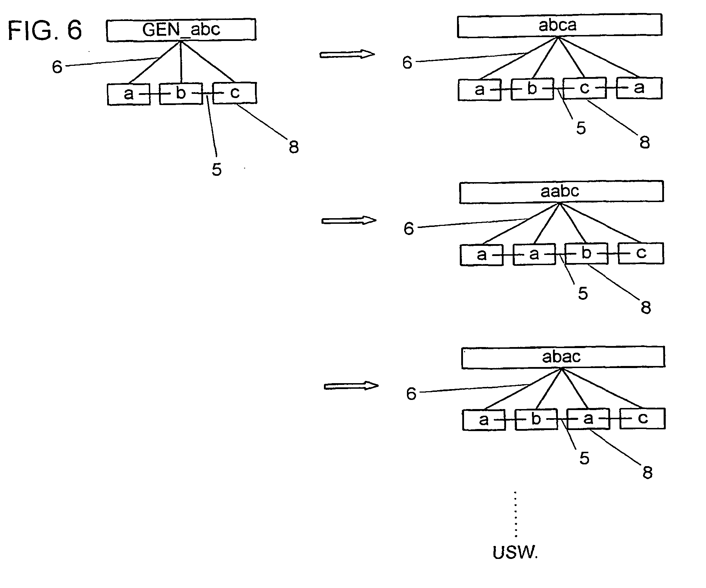

**Fig. 6** zeigt eine lokale Operation "Einhängen eines neuen Unter-Strukturobjekts" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Einhängen eines neuen Unter-Strukturobjekts" wird ein neues Verknüpfungsobjekt 6 vom Typus VSH zwischen einem Strukturobjekt 8 und einem anderen Strukturobjekt 8 erzeugt, welches bisher noch kein Ober-Strukurobjekt dieses Strukturobjekts 8 ist, wodurch dem Ober-Strukturobjekt ein neues Unter-Strukturobjekt zugeordnet wird und sich in Übereinstimmung damit der dem Ober-Strukturobjekt zugehörige Bereich der zu bearbeitenden Datenstruktur vergrößert.

Wie es in **Fig. 6** gezeigt ist, weist ein Gen abc die Codons a, b und c als Unter-Strukturobjekte auf. Diesem Gen abc wird ein weiteres Codon a zugeordnet, wodurch sich zum Beispiel die Gene abca, aabc, abac ergeben, wobei auch alle weiteren Kombinationen denkbar sind.

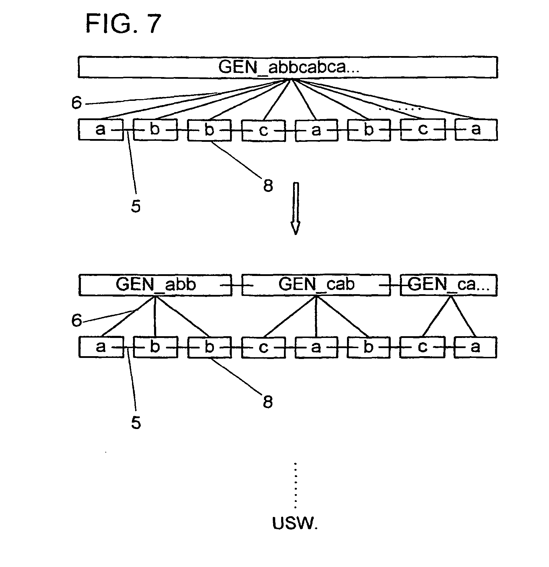

**Fig. 7** zeigt eine lokale Operation "Teilen" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Teilen" wird ein Strukturobjekt 8 auf der Grundlage seiner Unter-Strukturobjekte in mehrere neue Unter-Strukturobjekte 8 geteilt. Dies bedeutet, daß Unter-Strukturobjekte zu zwei oder mehreren Bereichen der zu bearbeitenden Datenstruktur gruppiert werden, die jeweils durch ein neu zu erzeugendes Strukturobjekt 8 auf der gleichen Hierarchieebene des hierarchischen Netzes von Struktureinheiten wie das geteilte Strukturobjekt 8 repräsentiert werden.

Wie es in **Fig. 7** gezeigt ist, wird das Gen abbcabca... in die drei neuen Gene abb, cab und ca... geteilt, die sich auf der gleichen Hierarchieebene wie das ursprüngliche Gen abbcabca... befinden. Auch hier sind wieder alle Möglichkeiten denkbar.

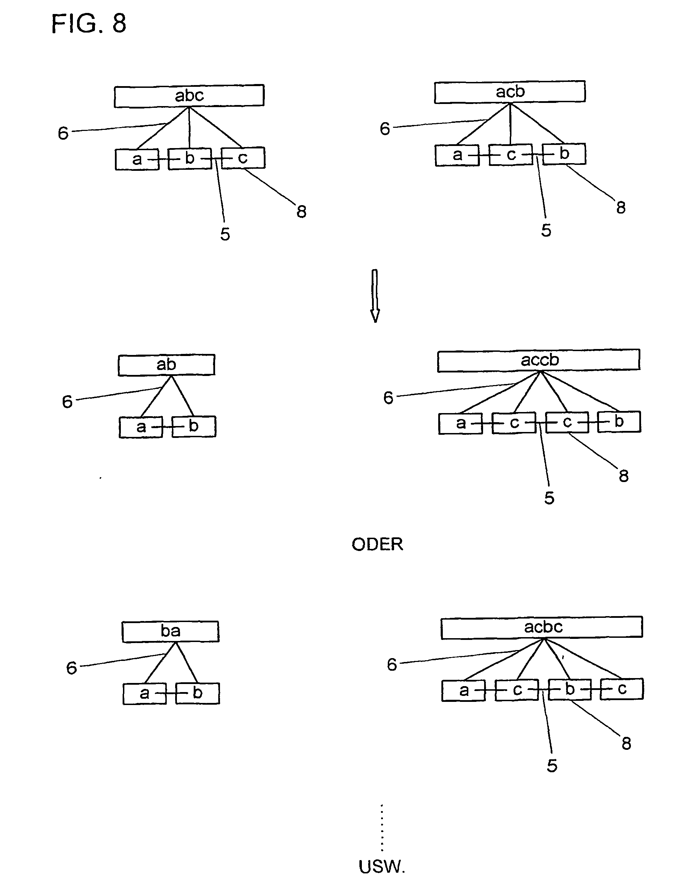

**Fig. 8** zeigt eine lokale Operation "Umgruppieren" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Umgruppieren" findet zuerst die zuvor bezüglich **Fig. 5** beschriebene lokale Operation "Ausgliedern" und dann die zuvor bezüglich **Fig. 6** beschriebene lokale Operation "Einhängen eines neuen Unter-Strukturobjekts" statt.

Wie es in **Fig. 8** gezeigt ist, wird zum Beispiel ein Codon c aus dem Gen abc ausgegliedert und in das Gen acb eingehängt, wodurch sich zum Beispiel die neuen Gene ab und accb oder ba und acbc ergeben. Ferner sind alle weiteren Möglichkeiten denkbar.

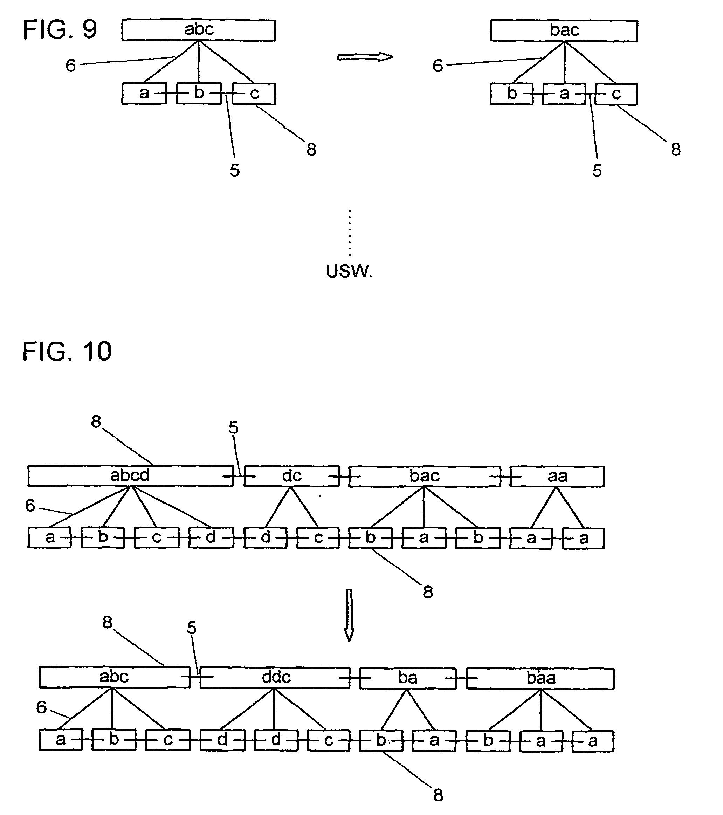

**Fig. 9** zeigt eine lokale Operation "Springen/Vertauschen" innerhalb der hierarchischen Netze von semantischen Struktureinheiten anhand eines jeweiligen Netzausschnitts gemäß dem Ausführungsbeispiel der vorliegenden Erfindung.

Bei der lokalen Operation "Springen werden die Position von Unter-Strukturobjekten eines Ober-Strukturobjekts vertauscht, was bedeutet, das ein oder mehrere Unter-Strukturobjekte von einer Position zu einer anderen Position springen.

Wie es in **Fig. 9** gezeigt ist, vertauschen zum Beispiel die Codons a und b ihre Positionen innerhalb des Gens abc, wodurch das neue Gen bac entsteht. Ein derartiges Vertauschen kann zum Beispiel irgendwelche kontextbezogene Gründe haben. Durch das Vertauschen entsteht eine Mutation.

**Fig. 10** zeigt eine lokale Operation "Randoptimierung" innerhalb der hierarchischen Netze von Struktureinheiten anhand eines jeweiligen Netzausschnitts gemäß dem Ausführungsbeispiel der vorliegenden Erfindung.

Bei der lokalen Operation "Randoptimierung" werden am Rand liegende Unter-Strukturobjekte eines Strukturobjekts 8 dahingehend analysiert, ob hinsichtlich eines vorbestimmten Kriteriums besser zu einem Nachbar-Strukturobjekt des bisherigen Ober-Strukturobjekts als zu dem bisherigen Ober-Strukturobjekt passen oder nicht. Wenn sie besser zu einem Nachbar-Strukturobjekt passen, wird ein Verknüpfungsobjekt 6 vom Typus VSH zu dem bisherigen Ober-Strukturobjekt dieses am Rand liegenden Unter-Strukturobjekts aufgelöst und ein neues Verknüpfungsobjekt 6 vom Typus VSH zu dem besser passenden Strukturobjekt 8 erzeugt, das nunmehr das neue Ober-Strukturobjekt wird.

In **Fig. 10** wird die Randoptimierung derart durchgeführt, daß mit abc, dc, bac und aa bezeichnete Strukturobjekte randoptimiert werden. Genauer gesagt werden die mit d und c bezeichneten Strukturobjekte, die Unter-Strukturobjekte der mit abc bzw. bac bezeichneten Strukturobjekte 8 sind, derart randoptimiert, das dem mit d bezeichneten Strukturobjekt 8 als neues Ober-Strukturobjekt das mit ddc bezeichnete Strukturobjekt 8 zugewiesen wird und dem mit c bezeichneten Strukturobjekt 8 das mit caa bezeichnete Strukturobjekt 8 zugewiesen wird.

Neben den zuvor beschriebenen und in den **Figuren 2 bis 10** gezeigten lokalen Operationen sind weiterhin die folgenden lokalen Operationen innerhalb der semantischen Netze von Struktureinheiten durchführbar.

Bei einer lokalen Operation "Kopieren" entsteht ein Objekt als eine Kopie von einem anderen Objekt. Zum Beispiel entsteht aus einer DNA-Abfolge ATG eine m-RNA-Abfolge UAC durch Kopieren von Informationen und Anwenden von Verarbeitungen, die dem zuvor beschriebenen genetischen Mechanismus entsprechen.

Bei einer lokalen Operation "Andocken" wird eine Nachbarschaft zwischen Objekten in unterschiedlichen Netzen von semantischen Struktureinheiten gebildet. Zum Beispiel werden bei der Proteinsynthese an bestimmte Kombinationen von Nukleotiden in der m-RNA nur bestimmte Kombinationen von Nukleotiden in der t-RNA und damit Aminosäuren angedockt.

Dies bedeutet, daß ein bestimmten Objekt aus einem ersten Netz von semantischen Struktureinheiten nur eine Nachbarschaft zu einem anderen bestimmten Objekt aus einem zweiten Netz von semantischen Struktureinheiten zulassen kann. Die Nachbarschaft bildet sich nur für eine bestimmte Zeitdauer. Dies hat den Zweck einer Informationsübertragung. Die Nachbarschaft löst sich nach einem Erfüllen des Zwecks des Informationsflusses wieder auf.

Bei allen der zuvor beschriebenen lokalen Operationen sind die Positionen und die Größen jeweiliger Objekte wesentlich für Identitäten und Wirkungen bezüglich anderer Objekte und die Reichweite dieser Wirkungen.

Das Koppelnetz zwischen den Netzen von semantischen Struktureinheiten, die unterschiedlichen Datenstrukturen beinhalten, verwendet je nach Bedarf alle zuvor beschriebenen Verarbeitungen und ist nach dem gleichen Prinzip wie die Netze von semantischen Struktureinheiten für die unterschiedlichen Datenstrukturen aufgebaut.

Wie es ersichtlich ist, können die vorhergehenden Verarbeitungen an allen möglichen Hierarchieebenen sowie zwischen den jeweiligen Netzen von semantischen Struktureinheiten stattfinden. Zum Beispiel kann das, was für Genome gilt, genauso für Peptide oder Proteine oder andere Netze gelten, welche nicht unbedingt benachbart sind. Genauso kann, um auf derartige Verarbeitungen zurückschließen zu können, für den gesamten Organismus eine entsprechende Beschreibung zugrunde gelegt werden, welche einem weiteren Schritt, wie zum Beispiel diagnostischen Zwecken, dienen kann. Zum Beispiel können genetische Gründe besser als bisher erfaßt und verfolgt werden. Der Mensch oder allgemein ein oder mehrere beliebige Organismen können also als ein Netz von miteinander vernetzten Datenstrukturen unterschiedlicher Inhalte aufgefaßt werden. Dies weist den entscheidenden Vorteil auf, daß Informationsflüsse und Qualitätssprünge innerhalb und außerhalb des Systems in allen Richtungen sogar historisch verfolgt werden können.

Nachstehend erfolgt die Beschreibung des Netze von semantischen Wissenseinheiten mittels der zuvor beschriebenen Klassenobjekte, Analyseobjekte, Prozessierungsobjekte und deren Verknüpfungen sowie eine Repräsentation der Analyse- und Prozessierungsalgorithmen.

Die in dem Netz von semantischen Wissenseinheiten enthaltenen und zuvor beschriebenen Klassenobjekte weisen drei unterschiedliche Grundfunktionen auf.

Zum einen wirken sie analysierend, was bedeutet, daß mittels von mit einem Klassenobjekt verknüpften Analyseobjekten semantische Einheiten und/oder bestimmte Teilnetze, insbesondere die jeweilige vernetzte Umgebung, analysiert werden. Dies wird insbesondere hinsichtlich einer Zugehörigkeit zu der durch das Klassenobjekt repräsentierten Klasse und mittels des zuvor beschriebenen Verknüpfungsobjekts vom Typus VKA durchgeführt.

Ferner wirken sie zuordnend, was bedeutet, daß semantische Einheiten, vorzugsweise aufgrund einer vorhergehenden Analyse, durch das zuvor beschriebene Verknüpfungsobjekt vom Typus VKZ mit einem Klassenobjekt verknüpft werden und dadurch der durch das Klassenobjekt repräsentierten Klasse zugeordnet werden.

Schließlich wirken sie prozessierend, was bedeutet, daß semantische Einheiten durch das zuvor beschriebene Verknüpfungsobjekt vom Typus VKZ mit einem Klassenobjekt verknüpft werden und ein in einem diesem Klassenobjekt zugehörigen Prozessierungsobjekt enthaltener Prozessierungsalgorithmus über ein Verknüpfungsobjekt vom Typus VKP und das Klassenobjekt auf die semantischen - Struktureinheiten und/oder bestimmte Teilnetze angewendet wird.

Es ist anzumerken, daß bei diesem Verfahren nicht nur Struktureinheiten, das heißt Strukturobjekte und/oder deren Verknüpfungen, mittels Klassenobjekten klassifiziert werden. Es besteht ebenso die Möglichkeit, beliebige Arten von semantischen Einheiten zu klassifizieren, wobei dies insbesondere für Verknüpfungsobjekte oder Klassenobjekte gilt. Durch diese Möglichkeit der Klassifikation beliebiger semantischer Einheiten nimmt die Möglichkeit, Inhalte der zu bearbeitenden Datenstrukturen zu beschreiben und zu prozessieren erheblich zu.

Klassenobjekte können insbesondere selbst wiederum Bestandteil von Analysealgorithmen eines Merkmalobjekts, zum Beispiel zur Extraktion eines Teilnetzes für eine bestimmte Analyse, oder Bestandteil von Prozessierungsalgorithmen in Prozessierungsobjekten, zum Beispiel zum Durchführen eines bestimmten Schritts, der zusätzliche Analyse erfordert, in dem gesamten, durch das Prozessierungsobjekt beschriebenen Prozeß sein. Dadurch, daß Merkmalobjekte und Prozessierungsobjekte selbst Bestandteile von Klassenobjekten sind, ergibt sich auf diese Weise eine fraktal-hierarchische Struktur von Klassenobjekten in dem Netz von semantischen Wissenseinheiten, was eine entsprechende fraktal-hierarchische Struktur von Analyse- und/oder Prozessierungsschritten zur Folge hat.

Wie es zuvor beschrieben worden ist, beinhalten Analyseobjekte Auswertealgorithmen, mittels denen sie mit ihnen verknüpfte semantische Einheiten, und/oder bestimmte Teilnetze analysieren. Analyseobjekte sind im allgemeinen mit einem Klassenobjekt verknüpft und werden auf diejenigen semantischen Einheiten, mit denen sie analysierend verknüpft sind, und/oder bestimmte Teilnetze angewendet.

Der zuvor beschriebene Auswertealgorithmus kann eine Auflistung von Kriterien sein, mittels der ein Grad einer Zugehörigkeit von semantischen Einheiten zu dem mit einem Analyseobjekt verknüpften Klassenobjekt festgestellt wird. Derartige Kriterien werden mittels Merkmalsobjekten definiert, wobei die Merkmalsobjekte über das Verknüpfungsobjekt vom Typus VM mit einem jeweiligen Analyseobjekt verbunden sind.

Jedes Merkmalsobjekt wertet jeweils eines der später beschriebenen Merkmale aus. Die Merkmalsobjekte werden einzeln oder in Gruppen angewendet und die Ergebnisse aller durchgeführten Auswertungen werden über eine Logik bzw. eine logische Verknüpfung miteinander verknüpft.

Diese Logik kann allgemein vorgegeben sein, wie zum Beispiel ein Mitteln der Ergebnisse aller Kriterien, hierarchisch gegliedert sein, für eine jeweilige Gruppe von Merkmalsobjekten spezifisch angegeben werden oder mittels einer Fuzzy-Logik formuliert werden.

Die Verknüpfungsobjekte vom Typus VM können ferner gewichtet sein, wodurch sich aus der Gewichtung dieses Verknüpfungsobjekts vom Typus VM das Maß ergibt, mit dem das jeweilige Merkmalsobjekt bzw. das in diesem beinhaltete Merkmal bei einer Gesamtauswertung berücksichtigt wird.

Die Merkmalsobjekte können mittels in ihnen enthaltenen Klassenobjekten und deren Prozessierungsobjekten virtuelle oder lediglich temporäre Strukturänderungen innerhalb des semantischen Netzes durchführen, um eine sich potentiell an eine jeweilige Klassifikation anschließende Strukturänderung innerhalb des semantischen Netzes in ihrem Ergebnis zu bewerten und folglich die betroffene semantische Einheit entsprechend zu klassifizieren. Mittels der Prozessierungsobjekte können ferner tatsächliche Änderungen durchgeführt werden, die erforderlich sind, um eine lokale Entscheidung hinsichtlich einer Klassifikation durchzuführen. Zum Beispiel können mittels der Prozessierungsobjekte auf diese Weise zum Zwecke einer weiteren Unterscheidung von Strukturobjekten Unter-Strukturobjekte gebildet werden, über deren Klassifikation und Zusammensetzung die eigentlich zu klassifizierenden Strukturobjekte dann unterschieden werden.

In Merkmalsobjekten beinhaltete Merkmale, anhand denen auszuwerten ist, können Merkmale sein, die sich auf die Eigenschaft von semantischen Einheiten beziehen, ohne die Analyse anderer semantischen Einheiten oder der Beziehungen zu diesen, die sich durch eine Analyse einer Eigenschaft der vernetzten Umgebung einer semantischen Einheit ergeben, zum Beispiel eine Zusammensetzung von Unter-Strukturobjekten anhand einer Klassifikation; Merkmale, die sich durch einen Vergleich einer Eigenschaft einer semantischen Einheit mit einer entsprechenden Eigenschaft ihrer vernetzten Umgebung ergeben; und Merkmale, die sich durch einen Vergleich einer Eigenschaft einer semantischen Einheit mit einer entsprechenden Eigenschaft eines bestimmten Teilnetzes ergeben. Es kann aber zum Beispiel auch eine Passung eines Strukturobjekts auf eine vorbestimmte Schablone oder andere Analysen sein.

Ferner können sich in Merkmalsobjekten enthaltene Merkmale aus einer Analyse der Klassifikation von semantischen Einheiten eines bestimmten Teilnetzes ergeben.

Wie es zuvor beschrieben worden ist, werden zur Beschreibung und Auswertung von einzelnen Merkmalen bzw. Attributen die Merkmalsobjekte verwendet.

Die in ihnen beinhalteten Auswertealgorithmen können von unterschiedlicher Art sein, wie zum Beispiel Fuzzy-Zugehörigkeitsfunktionen, Klassifikatoren, die anhand von bestimmten "Trainingsobjekten" mittels eines Nearest-Neighbour-Verfahrens auswerten, neuronale Netze, statistische Analysen oder Formschablonen, mittels denen zu klassifizierende oder zu optimierende semantische Einheiten oder Teilnetze von semantischen Einheiten verglichen werden.

Merkmalsobjekte können sowohl mit Analyseobjekten als auch mit Prozessierungsobjekten über das Verknüpfungsobjekt vom Typus VM verknüpft sein und werden von diesen auf die jeweiligen zu behandelnden semantischen Einheiten und/oder bestimmte Teilnetze angewendet.

Wie es zuvor beschrieben worden ist, beinhalten Prozessierungsobjekte Prozessierungsalgorithmen, mittels denen sie die mit ihnen direkt oder indirekt über ein Klassenobjekt verknüpften semantischen Einheiten und/oder bestimmte Teilnetze verändern. Derartige Veränderungen sind insbesondere alle lokalen Operationen, wie sie bereits hinsichtlich des hierarchischen Netzes von Struktureinheiten beschrieben worden sind, wobei anstelle der Strukturobjekte und deren Verknüpfungen allgemein alle Arten von semantischen Einheiten und deren Verknüpfungen mittels der lokalen Operationen prozessiert werden können, was bedeutet, daß insbesondere semantische Einheiten gelöscht, erzeugt, verändert, oder mit bereits bestehenden semantischen Einheiten im hierarchischen semantischen Netz verknüpft werden können.

Um eine Prozessierung zu unterstützen, können Prozessierungsobjekte mittels Klassenobjekten, die mit ihnen verknüpft sind, auch während einer Prozessierung Teilschritte durchführen, die eine zusätzliche Analyse erfordern.

Ferner können zum Zwecke der Strukturierung und der Komplexitätsreduktion von "Weltwissen" Klassenobjekte untereinander über unterschiedliche Verknüpfungsobjekte verknüpft sein.

Hierbei handelt es sich um die zuvor beschriebenen Verknüpfungsobjekte vom Typus VÄ mit den untergeordneten Verknüpfungsobjekten der Typen VÄH, VÄHA und VÄHJ, VÄN, VÄNA und VÄNJ, Verknüpfungsobjekte vom Typus VG mit den untergeordneten Verknüpfungsobjekten der Typen VGH und VGN sowie die Verknüpfungsobjekte vom Typus VÄG mit den untergeordneten Verknüpfungsobjekten der Typen VÄGH, VÄGHA, VÄGHJ und VÄGN.

Hierbei erzeugen das Verknüpfungsobjekt vom Typus VG und dessen untergeordnete Verknüpfungsobjekte der Typen VGH und VGN, die eine gruppierende Verknüpfung darstellen, eine Beziehung mit der Bedeutung nach oben innerhalb der hierarchischen Struktur "ist (semantisch) im allgemeinen" und nach unten innerhalb der hierarchischen Struktur "ist (semantisch) im speziellen". Dieses Verknüpfungsobjekt vom Typus VG und dessen untergeordnete verknüpfungsobjekte der Typen VGH, VGH und VGN werden zur Gruppierung von Klassenobjekten verwendet und erleichtern eine Definition von Beziehungen zwischen unterschiedlichen Klassen. Allgemein ausgedrückt erzeugen sie eine "Gruppierungshierarchie".

Ferner erzeugen das Verknüpfungsobjekt vom Typus VÄ und dessen untergeordnete Verknüpfungsobjekte der Typen VÄH, VÄHA und VÄHJ, VÄN, VÄNA und VÄNJ, die eine Ähnlichkeitsverknüpfung darstellen, eine Beziehung mit der Bedeutung nach oben innerhalb der hierarchischen Struktur "ist ähnlich im allgemeinen" und nach unten innerhalb der hierarchischen Struktur "ist ähnlich im speziellen". Hierbei findet eine Vererbung von Verknüpfungen zu Analyseobjekten und/oder Prozessierungsobjekten von Ober-Klassenobjekten zu Unter-Klassenobjekten statt. Allgemein ausgedrückt erzeugen sie eine "Ähnlichkeitshierarchie".

Die Vorgänge der Vererbung und Gruppierung können mittels des Verknüpfungsobjekts vom Typus VÄ und dessen untergeordneten Verknüpfungsobjekten der Typen VÄH, VÄHA und VÄHJ, VÄN, VÄNA und VÄNJ bzw. mittels des Verknüpfungsobjekts vom Typus VG und dessen untergeordneten Verknüpfungsobjekten der Typen VGH und VGN voneinander getrennt durchgeführt.

Es besteht jedoch auch die Möglichkeit, die Vorgänge der Vererbung und Gruppierung gemeinsam durchzuführen, was mittels des Verknüpfungsobjekts vom Typus VÄG und dessen untergeordneten Verknüpfungsobjekten der Typen VÄGH, VÄGHA, VÄGHJ und VÄGN durchgeführt wird, die sowohl Gruppierungs- als auch Vererbungseigenschaften aufweisen.

Die derart erzielten Hierarchien der Klassenobjekte sind entweder eindeutig, was bedeutet, das jedes Klassenobjekt maximal ein Ober-Klassenobjekt aufweist, oder sind nicht eindeutig, was bedeutet, daß jedes Klassenobjekt mehrere Ober-Klassenobjekte aufweisen kann, und was zu einer Mehrfach-Vererbung (Ähnlichkeitshierarchie) bzw. zu einer mehrfachen semantischen Zugehörigkeit (Gruppierungshierarchie) führt.

Ferner führen die zuvor beschriebenen Verknüpfungsobjekte zu einer speziellen hierarchischen Gliederung des Netzes aus Klassenobjekten. Durch diese Gliederung ist insbesondere die Formulierung von komplexeren Semantiken zur Prozessierung von Inhalten der zu bearbeitenden Datenstrukturen möglich.

Nachstehend erfolgt die Beschreibung, auf welche Weise eine Klassifikation von semantischen Struktureinheiten durchgeführt wird.

Die zu klassifizierenden Strukturobjekte bzw. allgemein semantischen Einheiten werden zunächst über Verknüpfungsobjekte vom Typus VKA mit jeweils allen in Frage kommenden Klassenobjekten verknüpft.

Hierbei sind zwei unterschiedliche Strategien zum Durchführen der Klassifikation möglich.

Die erste Strategie besteht darin, daß alle Klassenobjekte für eine Analyse von jeweils zu analysierenden semantischen Einheiten in Frage kommen, die sich auf der untersten Hierarchieebene einer mittels Verknüpfungsobjekten vom Typus VÄHA erzielten Ähnlichkeitshierarchie eines Netzes von Klassenobjekten befinden oder explizit als in Frage kommend gekennzeichnet sind. Die jeweils zu analysierenden semantischen Einheiten werden mittels Verknüpfungsobjekten vom Typus VKA mit diesen Klassenobjekten zwecks einer Analyse verknüpft. Im Anschluß werden die analysierten semantischen Einheiten mittels Verknüpfungsobjekten vom Typus VKZ zuordnend mit einem oder mehreren Klassenobjekten verbunden, bei deren Merkmalsauswertung sich eine Zugehörigkeit oder die höchste Zugehörigkeit zu der durch ein jeweiliges Klassenobjekt repräsentierten Klasse ergibt.

Die zweite Strategie besteht darin, daß alle Klassenobjekte in Frage kommen, die ausgehend von den Klassenobjekten auf der obersten Hierarchieebene einer mittels Verknüpfungsobjekten vom Typus VÄHA erzielten Ähnlichkeitshierarchie im Netz von Klassenobjekten entlang eines hierarchischen Entscheidungspfads in der Ähnlichkeitshierarchie angelaufen werden. Dieser Entscheidungspfad wird jeweils bei einem derartigen Klassenobjekt in einer jeweiligen Hierarchieebene der Ähnlichkeitshierarchie weitergeführt, zu welchem eine jeweilige zu analysierende semantische Einheit die höchste Zugehörigkeit aufweist. Die nächsten auszuwertenden Klassenobjekte sind dann alle Klassenobjekte, die von dem Klassenobjekt höchster Zugehörigkeit mittels Verknüpfungsobjekten vom Typus VÄHA nach unten in der Ähnlichkeitshierarchie verknüpft sind. Auf diesem Entscheidungspfad wird eine jeweils zu analysierende semantische Einheit zuordnend mittels eines Verknüpfungsobjekts vom Typus VKZ mit dem Klassenobjekt verknüpft, von dem aus es keine weiteren Verknüpfungsobjekte vom Typus VÄHA nach unten in der Ähnlichkeitshierarchie mehr gibt.

Verknüpfungsobjekte vom Typus VKA wenden die bei dem mit einem jeweiligen Klassenobjekt (möglicherweise geerbt) verknüpften Analyseobjekt vorgesehenen Merkmalsobjekte und deren logische Verknüpfungen untereinander an.

Nachstehend erfolgt die Beschreibung, auf welche Weise eine lokale Prozessierung durchgeführt wird.

Wenn eine semantische Einheit über ein Verknüpfungsobjekt vom Typus VKZ mit einem Klassenobjekt verknüpft ist, wobei dieses Klassenobjekt gleichzeitig mit einem oder mehreren Prozessierungsobjekten verknüpft ist, kann ein Verknüpfungsobjekt vom Typus VKP zwischen der semantischen Einheit und dem Klassenobjekt erzeugt werden, wobei über dieses Verknüpfungsobjekt vom Typus VKP der in dem Prozessierungsobjekt oder den Prozessierungsobjekten enthaltene Prozessierungsalgorithmus auf die semantische Einheit und/oder bestimmte Teilnetze angewendet wird.

Der zeitliche Steuerablauf, wann dies jeweils erfolgt, kann global für alle Klassenobjekte mit einer Verknüpfung zu einem Prozessierungsobjekt vorgegeben werden, global für spezifische Klassenobjekte mit einer Verknüpfung zu einem Prozessierungsobjekt vorgegeben werden oder ein weiterer Bestandteil eines spezifischen Prozessierungsobjekts sein.

Bezüglich der möglichen Veränderungen innerhalb des hierarchischen Netzes sei auf die vorhergehenden Ausführungen hinsichtlich der Prozessierungsobjekte verwiesen.

Nachstehend erfolgt die Beschreibung einer Clusteranalyse von semantischen Struktureinheiten.

Mittels eines gebräuchlichen Verfahrens, der Clusteranalyse, können semantische Struktureinheiten in einem vorgegebenen Merkmalsraum zu Gruppen von semantischen Struktureinheiten mit ähnlichen Eigenschaften für eine weitere Verarbeitung zusammengefaßt werden.

Klassenobjekte können zusammen mit den zu ihnen gehörenden Merkmalsobjekten derart automatisch erzeugt werden, daß sie jeweils ein Cluster von ähnlichen semantischen Struktureinheiten in einem vorgegebenen Merkmalsraum beschreiben.

Eine für viele Anwendungen wichtige Möglichkeit ist die Ergänzung von Information, die nicht direkt in der erfaßten Datenstruktur vorhanden ist. Dies ist durch Strukturobjekte möglich, die keinen Bereich der Datenstrukturen repräsentieren und durch entsprechende Analyse- und Prozessierungsvorschriften erzeugt werden.

Auch durch Übertragung von Attributen von einem Klassenobjekt auf mit ihm zugehörig verknüpften semantischen Einheiten kann eine Ergänzung von nicht direkt in den Datenstrukturen enthaltenen Informationen geschehen.

Nachstehend erfolgt die Beschreibung eines Prozessierungsergebnisses.

Als Ergebnis einer Prozessierung bzw. Verarbeitung liegen hierarchische Netze von semantischen Struktureinheiten vor, in denen jedes Strukturobjekt über Verknüpfungsobjekte vom Typus VS mit anderen Strukturobjekten seiner Umgebung verknüpft ist und über Verknüpfungsobjekte vom Typus VKZ keiner, einer oder mehreren Klassenobjekten bzw. der durch diese repräsentierten Klasse zugeordnet worden ist.

Ausgehend von derartigen Klassenobjekten ist entlang einer Bedeutungshierarchie mittels Verknüpfungsobjekten vom Typus VG weitere Information für jedes einer Klasse zugeordnete Strukturobjekt enthalten, wie zum Beispiel eine allgemeinere Klassifikation über Verknüpfungsobjekte vom Typus VGH nach oben in der Hierarchie oder andere Klassen ähnlicher Bedeutung über Verknüpfungsobjekte vom Typus VGN.

Für jedes Klassenobjekt können alle semantischen Einheiten, die diesem Klassenobjekt bzw. der durch diesen repräsentierten Klasse zugeordnet worden sind, durch eine Verknüpfung mittels eines Verknüpfungsobjekts vom Typus VKZ abgerufen werden.

Entlang der vielfältigen Verknüpfungen der semantischen Einheiten kann eine Navigation durch die semantischen Netze durchgeführt werden, wobei eine interessante Detailinformation über die analysierten bzw. prozessierten Datenstrukturen abrufbar ist.

Die gesamten sich ergebenden semantischen Netze und damit die in ihnen repräsentierten Informationen bezüglich von Datenstrukturen können gespeichert und wieder neu geladen werden.

Ein wesentlicher Vorteil besteht ferner darin, daß durch Herausnehmen aller Datenpunktobjekte aus einem Netz von Struktureinheiten nach einer erfolgten Prozessierung einer erfaßten Datenstruktur eine starke Reduktion der Gesamtinformation möglich ist, ohne daß die durch die erzeugte sinnvolle Verschränkung der Netze von Struktureinheiten und der Netze von Wissenseinheiten repräsentierte und durch die Prozessierung gewonnenen neuen Informationen eingeschränkt werden müssen. Dadurch eignet sich das Verfahren insbesondere zur Kompression von Datenstrukturen bzw. zur Anlage von Datenbanken.

Zur Verdeutlichung der vorhergehenden Ausführungen wird nachfolgend ein veranschaulichenden Beispiel beschrieben.

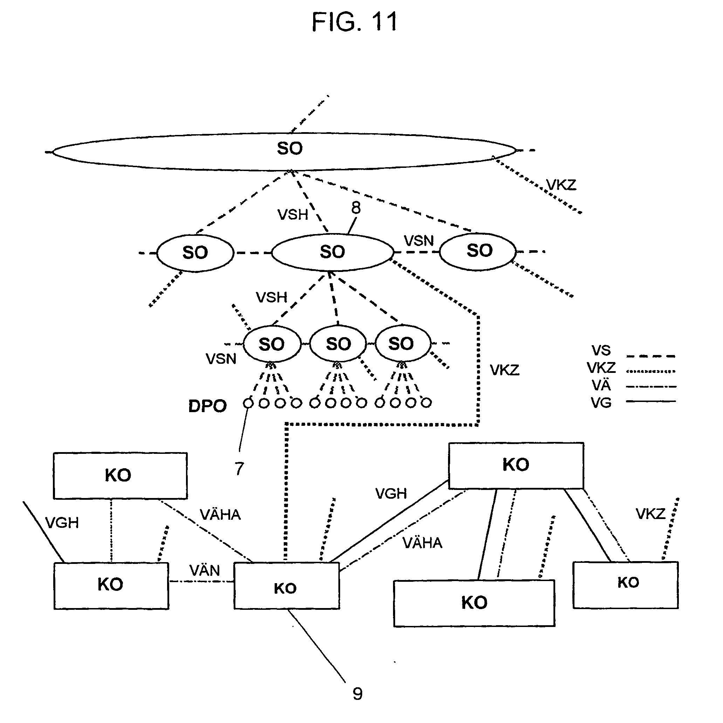

Fig. 11 zeigt ein Beispiel einer vernetzten Umgebung eines klassifizierten Strukturobjekts 8 und eines entsprechenden Klassenobjekts 9 in schematischer Darstellung. In dieser Figur sind jeweilige Verknüpfungsobjekte zwischen semantischen Einheiten symbolisch als diese semantischen Einheiten verbindende Linien dargestellt.

Das klassifizierte Strukturobjekt 8 ist über ein zuordnendes verknüpfungsobjekt vom Typus VKZ mit dem Klassenobjekt 9 verknüpft. Ferner ist das klassifizierte Strukturobjekt 8 über hierarchische und nachbarschaftliche verknüpfungsobjekte vom Typus VS mit anderen in der Figur mit "SO" bezeichneten Strukturobjekten verknüpft. Über seine Unter-Strukturobjekte ist das klassifizierte Strukturobjekt 8 indirekt mit den in der Figur mit "DPO" bezeichneten Datenpunktobjekten 7 und damit der erfaßten Datenstruktur verknüpft, die es repräsentiert. Wie es aus der Figur ersichtlich ist, repräsentiert das klassifizierte Strukturobjekt 8, das mit dem Klassenobjekt 9 verknüpft ist, eine Klasse, die durch das Klassenobjekt 9 ausgedrückt wird. Über Verknüpfungsobjekte vom Typus VÄHA, mit denen ebenso Verknüpfungen zu Analyseobjekten und damit Merkmalsbeschreibungen vererbt werden können, ist das Klassenobjekt 9 mit anderen in der Figur mit "KO" bezeichneten Klassenobjekten verknüpft und erbt von diesen die jeweiligen Merkmalsbeschreibungen. Dadurch kann das Klassenobjekt 9 bzw. die durch sie repräsentierte Klasse als ähnlich zu anderen Klassenobjekten bezeichnet werden. Ferner ist das Klassenobjekt 9 über ein Verknüpfungsobjekt vom Typus VGH als untergeordnetes Klassenobjekt einem anderen Klassenobjekt semantisch zugeordnet. Damit ist festgelegt, daß das Klassenobjekt 9 semantisch im allgemeinen als das andere Klassenobjekt aufzufassen ist.

Ein wesentlicher Punkt besteht darin, daß Datenstrukturen unterschiedlicher Inhalte, wie zum Beispiel DNA, m-RNA, t-RNA, r-RNA und Proteine, sowie die mit diesen verbundenen Informationen und Informationsflüsse gleichzeitig sowohl für sich als auch in Beziehung zueinander analysiert werden.

Zum Beispiel erfolgt der Übergang von der DNA zu der RNA zu Proteinen nicht durch Gruppieren, sondern durch Kopieren und Andocken von Objekten. Die m-RNA entsteht aus der DNA durch Kopieren von Informationen, die t-RNA ensteht aus der m-RNA durch Kopieren von Informationen und die Proteine entstehen durch Andocken von Aminosäuren an entsprechende Positionen der t-RNA mittels von der t-RNA angeregten Enzymen und Andocken der t-RNA an die beladene m-RNA.

Dabei sind der Ort des Kopierens und des Entstehens von Informationen und Bausteinen der betrachteten Datenstrukturen unterschiedlich. Die DNA befindet sich in dem Nukleus, die m-RNA entsteht durch Kopieren aus der DNA innerhalb des Nukleus, die t-RNA entsteht durch Kopieren aus der m-RNA in den Ribosomen im Cytoplasma und die Proteine entstehen durch Andocken von Aminosäuren an die t-RNA im Cytoplasma und Andocken der beladenen t-RNA an die m-RNA in den Ribosomen im Cytoplasma.

Die Inhalte, Informationsinhalte und Funktionen, wie zum Beispiel Entstehungs- und Wirkungsort der zu vernetzenden Datenstrukturen sind also unterschiedlich.

Als Datenquelle kann jede Form von Datenquelle, welche eine genetische Information liefert, wie zum Beispiel Fluoreszenz- oder Elektrophoreseprodukte, dienen.

Die jeweiligen Einzeldaten, das heißt die Basen A, T, G und C, werden in ein Netz von semantischen Struktureinheiten eingegeben, welches in dem Fall dieses Ausführungsbeispiels das DNA-Netz von semantischen Struktureinheiten ist. Mittels etzes von semantischen Wissenseinheiten werden in iterativen Schritten semantische Struktureinheiten und/oder deren Vernetzung aufgrund der erfaßten Daten erzeugt, analysiert, abgewandelt, gelöscht und oder gespeichert. Durch die Verschränkung der DNA-, RNA- und Protein-Netze von semantischen Einheiten, die jeweils aus einem Netz von semantischen Struktureinheiten bestehen, erfolgt dies nicht nur innerhalb eines Netzes von semantischen Einheiten, sondern in allen drei miteinander verschränkten DNA-, RNA- und Protein-Netzen. Die semantischen Struktureinheiten und/oder deren Vernetzung innerhalb der DNA-, RNA- und Protein-Netze werden in iterativen Schritten klassifiziert. Aufgrund dieser. Klassifikation ist eine spezifische Verarbeitung mittels des Netzes von semantischen Wissenseinheiten aktivierbar, mittels welcher verschiedene Operationen ausgeführt werden können. Zum Beispiel können eine oder mehrere semantische Struktureinheiten und/oder ein bestimmtes Teilnetz verändert werden. Ferner können diese ebenso nach neuen Kriterien klassifiziert werden. Dabei werden die in den DNA-, RNA- und Protein-Netzen vorhandenen Datenstrukturen aufgrund von Klassifikationen und Vernetzungen sowohl innerhalb der DNA-, RNA- und Protein-Netze als auch zwischen diesen Netzen sowohl gleichzeitig für sich als auch in Beziehung zueinander analysiert.

Auf diese Weise werden mit den zuvor beschriebenen Verarbeitungen in dem DNA-Netz von semantischen Struktureinheiten zum Beispiel Struktureinheiten für Nukleotide, Codogens, Gene, Operonen, Chromosomen usw. mittels der in dem Netz von semantischen Wissenseinheiten vorhandenen Wissensbasis gebildet, verändert, vernetzt und/oder klassifiziert.

Gleichzeitig werden mit den zuvor beschriebenen Verarbeitungen in dem RNA-Netz von semantischen Struktureinheiten zum Beispiel Struktureinheiten für Nukleotide, Codons, Gene, Operonen, Chromosomen usw. mittels der in dem Netz von semantischen Wissenseinheiten vorhandenen Wissensbasis gebildet, verändert, vernetzt und/oder klassifiziert.

Schließlich werden mit den zuvor beschriebenen Verarbeitungen in dem Protein-Netz von semantischen Struktureinheiten zum Beispiel Struktureinheiten für Aminosäuren, Proteine, Gruppen von Proteinen usw. mittels der in dem Netz von semantischen Wissenseinheiten vorhandenen Wissensbasis gebildet, verändert, vernetzt und/oder klassifiziert.

Die Vernetzung innerhalb der Netze und zwischen den Netzen weist einen hierarchischen Aufbau auf, wobei jedoch auch nachbarschaftliche Beziehungen vorhanden sind.

Aufgrund der Vernetzung der Netze von semantischen Struktureinheiten und der Netze von semantischen Wissenseinheiten wird eine selektive und der jeweiligen Fragestellung angepaßte Verarbeitung der in den unterschiedlichen Datenstrukturen enthaltenen Information ermöglicht. Die Datenstrukturen wirken dabei sowohl auf die Netze von semantischen Struktureinheiten und das Netz von semantischen Wissenseinheiten. Umgekehrt wirken diese Netze auch auf die Datenstrukturen. Auch wirken die unterschiedlichen Datenstrukturen aufeinander und auf die jeweils anderen Netze. Auf diese Weise können in den Datenstrukturen enthaltene Artefakte behoben, Wissen über den genetischen Code zum Beispiel durch Simulation korrigiert und ergänzt, neu erfaßt werden oder sogar neu entstehen.

Genauer gesagt weisen die Netze von semantischen Struktureinheiten für DNA-, RNA- und Protein-Datenstrukturen eine derartige hierarchische Struktur auf, daß aufgrund unterschiedlicher Hierarchieebenen ein Organismus oder mehrere Organismen abbildbar sind. Daten sind dabei in mindestens einen Teilbereich einer oder mehrerer Hierarchieebenen eines oder mehrerer der Netze von semantischen Struktureinheiten eingebbar sind. Mittels der Klassifikation erfolgt eine Funktionsanalyse von semantischen Struktureinheiten in Abhängigkeit von eingegebenen Daten derart, daß eine jeweilige Funktion von semantischen Struktureinheiten und von deren Vernetzungen durch alle Netze und zwischen allen Netzen von semantischen Struktureinheiten bestimmt und/oder verändert wird und als Ergebnis der Funktionsanalyse gegebenenfalls die in dem Netz von semantischen Wissenseinheiten vorhandene Wissensbasis verändert wird.

Die Veränderung der Wissensbasis kann zum Beispiel ein Löschen, Ergänzen und/oder Verändern von semantischen Wissenseinheiten und von deren Vernetzungen innerhalb des Netzes von semantischen Wissenseinheiten und zwischen dem semantischen Netzen von Wissenseinheiten und jeweiligen Netzen von semantischen Struktureinheiten beinhalten.

Die zuvor beschriebene Funktionsanalyse dient diagnostischen Zwecken, um Ursachen von Änderungen innerhalb eines Organismus oder mehreren Organismen zu ermitteln.

Zum Beispiel besteht die Möglichkeit, mögliche genetische Ursachen einer Krebserkrankung für einen bestimmten Organismus zu ermitteln. Tritt die gleiche Art der Krebserkrankung an anderen Organismen auf, können auch für diese Organismen mögliche Ursachen ermittelt werden. Durch Vergleichen der jeweils festgestellten Ursachen besteht dann die Möglichkeit, festzustellen, welche möglichen Ursachen bei allen Organismen festgestellt worden sind. Diese bei allen Organsimen festgestellten Ursachen können dann als Ursachen klassifiziert werden, die mit einer hohen Wahrscheinlichkeit oder mit Sicherheit für die Krebserkrankung verantwortlich sind. Aufgrund der Klassifikation kann dann die in dem Netz von semantischen Wissenseinheiten vorhandene Wissensbasis verändert, das heißt inhaltlich verändert, erweitert oder eingeschränkt, werden.

Nachstehend erfolgt eine beispielhafte Auflistung von semantischen Einheiten, die in den DNA-, RNA- und Protein-Netzen definiert sein können.

In allen der drei zuvor erwähnten Netze können zum Beispiel allgemein folgende semantischen Einheiten definiert sein: von der Biologie her bekannte Objekte, wie zum Beispiel Nukleotide, Codogens bzw. Codons, Gene, Strukturgene, Operatorgene, Operons, Regulatorgene, DNA, m-RNA. t-RNA, Aminosäuren, Proteine, Enzyme, Peptide usw., und Objekte, deren Definition sich aus der Fragestellung heraus als notwendig erweist, wie zum Beispiel ein Stück von einem Operon, um in der Lage zu sein, eine jeweilige Fragestellung zu bewältigen.

In dem DNA-Netz können zum Beispiel allgemein die folgenden semantischen Einheiten definiert sein: Nukleotide, Codogens, Gene (Die DNA-Abschnitte, welche aus ungefähr 10³ Nukleotidpaaren bestehen, wobei ihr Baumuster die Information für eine Polypeptidkette enthält.), Operatorgene (Der Abschnitt am Anfang einer Reihe von Strukturgenen, der funktionell zusammenarbeitende Proteine determiniert. Das Operatorgen startet das Bilden der m-RNA an dieser Genreihe, sofern es nicht von einem zugehörigen Repressor daran gehindert wird.), Operons (Regulationseinheiten aus einer Reihe von Strukturgenen, einem am Anfang liegenden Operatorgen und einem meist an anderer Position liegenden Regulatorgen. Die Reihe von Strukturgenen trägt die Information für biochemisch zusammenwirkende Enzyme zum Beispiel für die Schritte der Synthese einer Aminosäure. Das Bilden aller von einem Operon determinierten Enzyme wird von dem Repressor abgeschaltet, indem dieser das Bilden einer zugehörigen m-RNA unterdrückt, Regulatorgene, Strukturgene, DNA und Objekte, welche während einer Analyse oder durch eine automatische Klassifikation definiert werden und als sinnvoll erscheinen, eine jeweilige Fragestellung zu bearbeiten, wobei sich durch die Klassifikation ergeben kann, ob diese Objekte im Sinne der Fragestellung sinnvoll sind oder nicht.

Im RNA-Netz können zum Beispiel allgemein für die m-RNA und die t-RNA jeweils ähnliche semantische Einheiten wie für die DNA definiert sein.

Im Protein-Netz können zum Beispiel allgemein die folgenden semantischen Einheiten definiert sein: Aminosäuren (Dies sind die zwanzig wichtigsten bekannten natürlich vorkommenden aus der Biologie bekannten, das heißt Clycin, Alanin, Valin, Leucin, Isoleucin, Serin, Threonin, Asparaginsäure, Asparagin, Glutaminsäure, Glutamin, Lysin, Arginin, Histidin, Phenylanalin, Tyrosin, Tryphtophan, Prolin, Cystein, Methionin.), Gruppen von Aminosäuren (Peptide, wie zum Beispiel Dipeptide, Tripeptide, Polypeptide), Enzyme, Proteine (als Gruppen von über einhundert Aminosäuren) und Objekte, welche während einer Analyse oder durch eine automatische Klassifikation definiert werden und als sinnvoll erscheinen, eine jeweilige Fragestellung zu bearbeiten, wobei sich durch die Klassifikation ergeben kann, ob diese Objekte im Sinne der Fragestellung sinnvoll sind oder nicht.

Die folgenden Definitionen von Beziehungen können allgemein in allen drei Netzen vorliegen:
Definitionen über eine Nachbarschaft, wie zum Beispiel welche Nachbarn und welchen Abstand zu den Nachbarn vorliegen. Ein Abstand zwischen semantischen Einheiten im DNA-Netz kann zum Beispiel ein Längenabstand zwischen gleichen Codogens oder ähnlichen Codogens sein. Allgemein kann ein Anstand im allgemeinen ein Längenabstand zwischen semantischen Einheiten sein. Ferner kann ein Abstand zum Beispiel ein Ähnlichkeitsabstand bzw. eine Ähnlichkeitsdifferenz, wie zum Beispiel eine Differenz zwischen Inhalten, das heißt Unter-Objekten, zwischen semantischen Einheiten sein kann. Schließlich kann ein Abstand als eine Position einer semantischen Einheit innerhalb des Netzes von semantischen Einheiten definiert sein.
Definitionen über eine Ähnlichkeit, wie zum Beispiel Codon_1 ist ähnlich zu Codon_2.
Definitionen, welche Unter-Objekte, zum Beispiel welche Unter-Objekte weist ein bestimmtes Codon auf, welche Codons sind innerhalb eines Operons oder welche Codons befinden sich innerhalb einer durch eine Analyse oder durch eine Klassifikation auf eine Fragestellung bezogen definierte semantische Einheit.
Definitionen, welche Oberobjekte, zum Beispiel welches Nukleotid zu welchem Codon, welches Codon zu welchem Operon oder welche semantische Einheit weist als Ober-Objekt welche andere innerhalb eines jeweiligen Netzes auf.
Definitionen, welche Beziehungen zu dem Ober-Objekt, zum Beispiel welche Position im Bezug auf das gesamte Ober-Objekt weist das Unter-Objekt auf, wodurch zum Beispiel ein Codon START oder STOPP definiert wird, oder welche Position weist ein Codon innerhalb eines Operons auf, wie zum Beispiel Drittes vom Ende oder Drittes vom Anfang.
Definitionen, welche Beziehungen zum Unter-Objekt, wie zum Beispiel das Codon_1 definiert im wesentlichen eine bestimmte charakteristische Eigenschaft des Operons_1 oder ein fehlendes Nukleotid innerhalb eines Strukturgens bringt den ganzen Sinn des Strukturgens durcheinander.

Beziehungen, die durch einen Benutzer auf eine Fragestellung bezogen oder durch eine Klassifikation automatisch definiert werden oder sich als notwendig erweisen, welche nicht bisher existierenden biologischen Kenntnissen entsprechen.

Ferner Arten von Beziehungen sind Beziehungen zwischen den drei Netzen, welche auf eine Fragestellung bezogen den Informationsflüssen zwischen den Netzen dienen, Kopie von, wie zum Beispiel Kopie von Codon_1 in der m-RNA ist eine Kopie von Codogen_A in DNA, Zuordnung zu, wie zum Beispiel Aminosäure_A ist zugeordnet zu Codon_1 in der m-RNA, verantwortlich für, wie zum Beispiel Strukturgen_A ist verantwortlich für Tripeptid_B in dem Protein-Netz, abgeleitet von, wie zum Beispiel Fehler an dem Gen_1 kann oder könnte abgeleitet sein aus der Fehlinformation, welche über das Codon_2 von der m-RNA geliefert wird, wobei der Fehler an dem Codon_2 wiederum abgeleitet sein kann oder könnte aus der Fehlinformation, welche von Codon der t-RNA bei der Anregung eines Enzyms_G statt eines Enzyms_D bei dem Andocken der Aminosäure_C bei dem Bilden des Proteins_1 geliefert wird, Bildung über, wie zum Beispiel unbekannte Art Protein_A könnte über Fehlen von Codon_1 in dem Gen_1 der DNA gebildet sein, und Träger von Information, wie zum Beispiel über die Bildung von Polypeptid_G.

Weiterhin werden für eine Klassifikation mittels Stringmatching Merkmale und Attribute definiert, wie zum Beispiels Strings Textur- Inhalt, Länge, Varianz, Textur, Position. Es können auch Wirkungsattribute, wie zum Beispiel Codon_1 entspricht START oder STOPP, definiert werden.

Alle zuvor beschriebenen Beziehungen sind ebenso wiederum semantische Einheiten.

Wie es zuvor erwähnt worden ist, können neben semantischen Einheiten, die bezüglich genetischen, biologischen, biomedizinischen und biochemischen Datenstrukturen, wie zum Beispiel DNA, RNA und Proteine, eine Bedeutung aufweisen, auch semantische Einheiten erzeugt und bei einer weiteren Verarbeitung verwendet werden, die im Hinblick auf die bekannten Zusammenhänge in der Biologie, Biochemie, Biomedizin und Genetik keine bekannte Bedeutung aufweisen. Derartige semantische Einheiten werden als fiktive semantische Einheiten klassifiziert und können bei einer jeweiligen Fragestellung verwendet werden, wenn sich dies als sinnvoll erweist. Zum Beispiel kann eine zuerst als fiktiv klassifizierte semantische Einheit während einer weiteren Verarbeitung erneut klassifiziert werden, um schließlich eine semantische Einheit zu sein, die bezüglich den biologischen, biochemischen, biomedizinischen und genetischen Datenstrukturen eine Bedeutung aufweist.

Die fiktiven semantischen Einheiten können sich sowohl in einer Hierarchieebene befinden, in der sich eine Bedeutung hinsichtlich der Datenstrukturen tragende semantische Einheiten befinden, sie können jedoch auch Zwischenebenen in der Hierarchie definieren, in der sich keine Bedeutung hinsichtlich der Datenstrukturen tragende semantische Einheiten befinden.

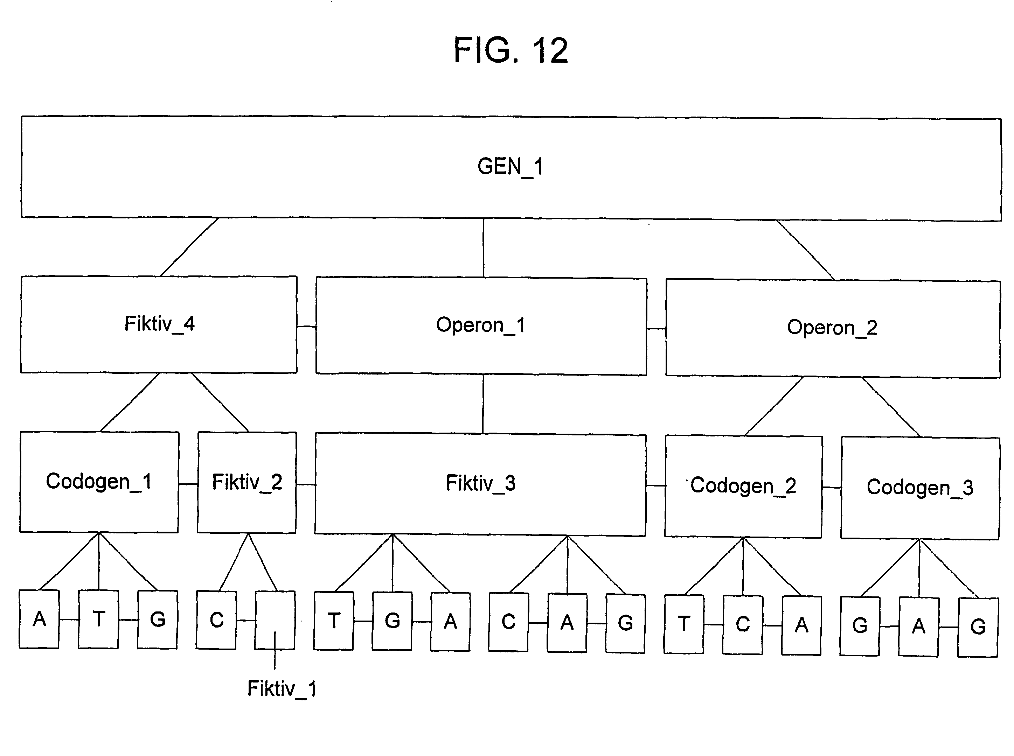

Unter Bezugnahme auf die **Figuren 12 bis 17** wird im weiteren Verlauf ein Beispiel von klassifizierten Netzen von semantischen Struktureinheiten von DNA-, RNA- und Protein-Datenstrukturen gegeben, wobei ebenso eine Klassenhierarchie dargestellt wird.

**Fig. 12** zeigt ein Beispiel eines klassifizierten hierarchischen Netzes von Struktureinheiten einer DNA-Datenstruktur gemäß dem Ausführungsbeispiel der vorliegenden Erfindung.

Wie es aus **Fig. 12** ersichtlich ist, beinhaltet das klassifizierte Netz von semantischen Struktureinheiten vier Hierarchieebenen, das heißt, die Ebene der Nukleotide, die Ebene der Codogens, die Ebene der Operons und die Ebene der Gene. Auf unterschiedlichen Ebenen sind hierbei ebenso semantische Struktureinheiten vorhanden, die hinsichtlich der DNA-Datenstruktur keine Bedeutung tragen und demgemäß als fiktive semantische Einheiten klassifiziert sind. Die mittels Verknüpfungsobjekten realisierten Beziehungen sind in **Fig. 12** mittels Strichen zwischen jeweiligen semantischen Struktureinheiten dargestellt.

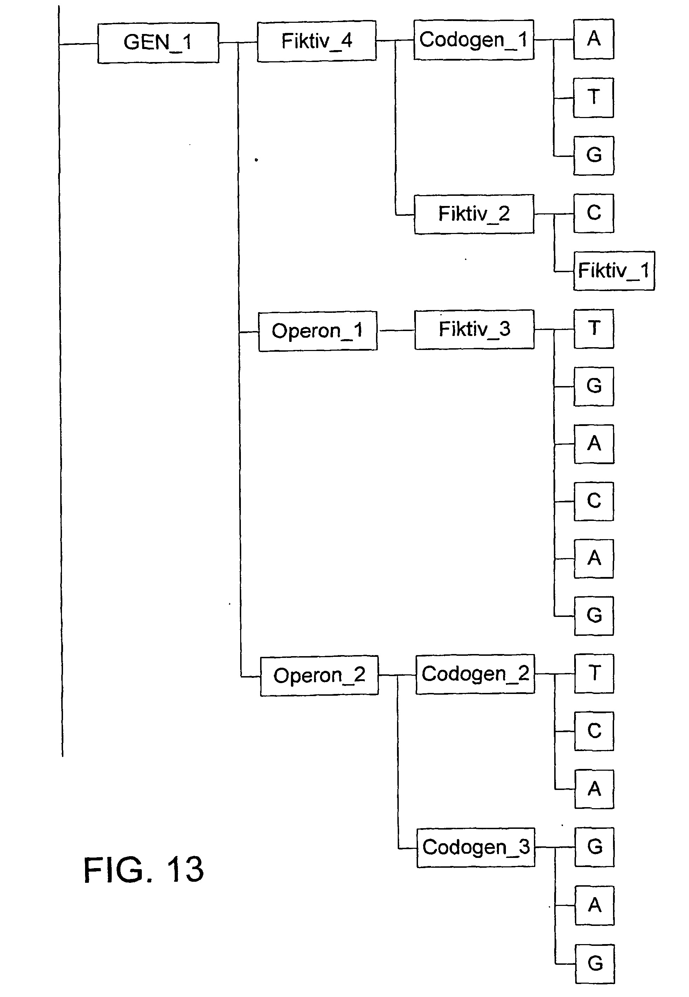

**Fig. 13** zeigt eine Darstellung von Klassenobjekten in einer Gruppierungshierarchie gemäß der DNA-Datenstruktur in **Fig. 12,** wobei in **Fig. 13** von links nach rechts die Darstellung von der obersten zu der untersten Hierarchieebene in **Fig. 12** erfolgt.

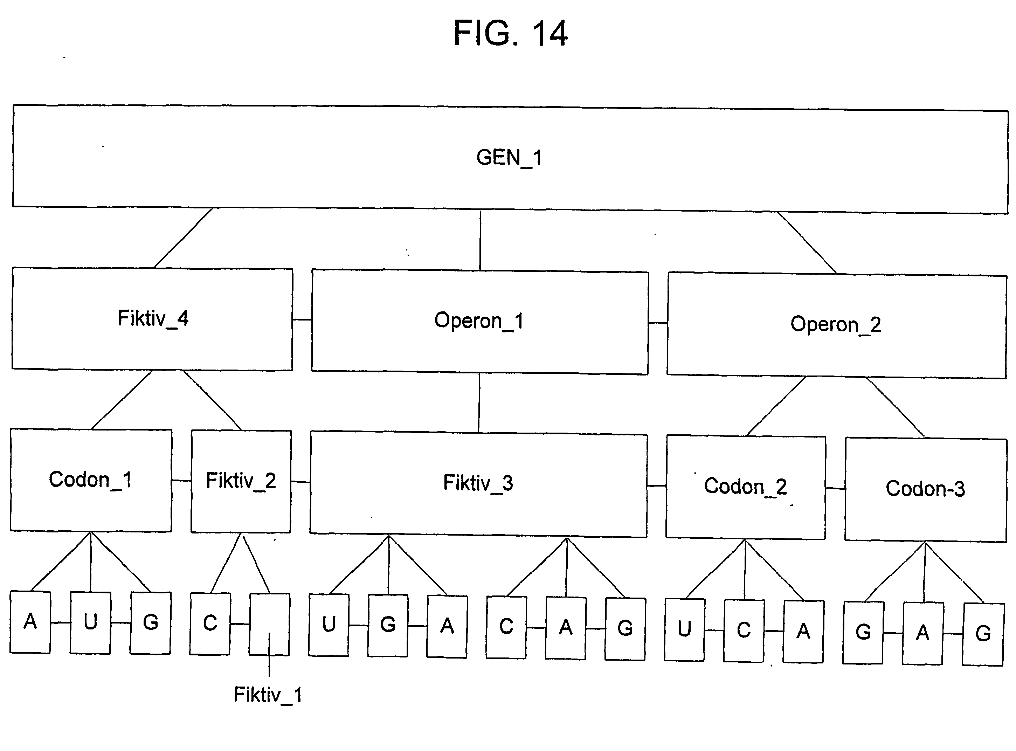

**Fig. 14** zeigt ein Beispiel eines klassifizierten hierarchischen Netzes von Struktureinheiten einer RNA-Datenstruktur gemäß dem Ausführungsbeispiel der vorliegenden Erfindung.

Wie es aus **Fig. 14** ersichtlich ist, beinhaltet das klassifizierte Netz von semantischen Struktureinheiten vier Hierarchieebenen, das heißt, die Ebene der Nukleotide, die Ebene der Codons, die Ebene der Operons und die Ebene der Gene. Auf unterschiedlichen Ebenen sind hierbei ebenso semantische Struktureinheiten vorhanden, die hinsichtlich der RNA-Datenstruktur keine Bedeutung tragen und demgemäß als fiktive semantische Einheiten klassifiziert sind. Die mittels Verknüpfungsobjekten realisierten Beziehungen sind in **Fig. 12** mittels Strichen zwischen jeweiligen semantischen Struktureinheiten dargestellt.

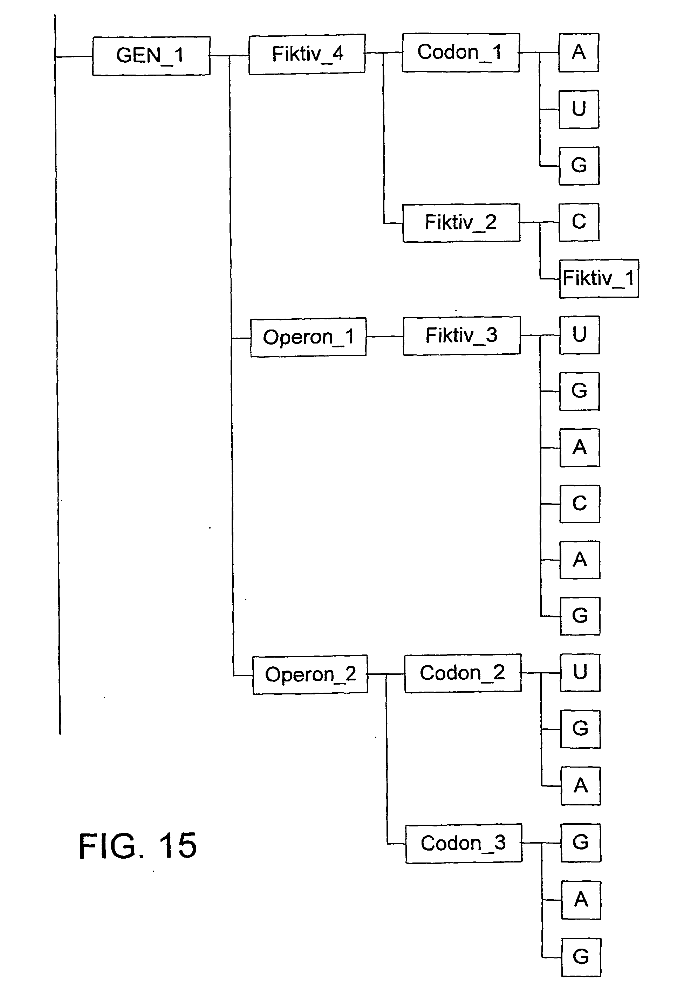

**Fig. 15** zeigt eine Darstellung von Klassenobjekten in einer Gruppierungshierarchie gemäß der RNA-Datenstruktur in **Fig. 14,** wobei in **Fig. 15** von links nach rechts die Darstellung von der obersten zu der untersten Hierarchieebene in **Fig. 14** erfolgt.

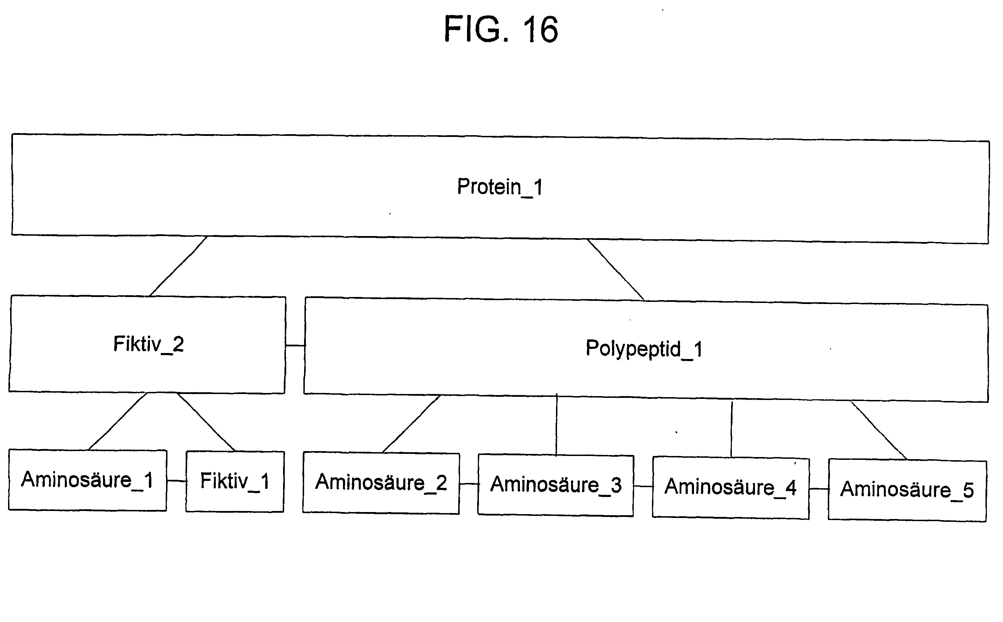

**Fig. 16** zeigt ein Beispiel eines klassifizierten hierarchischen Netzes von Struktureinheiten einer Protein-Datenstruktur gemäß dem Ausführungsbeispiel der vorliegenden Erfindung.

Wie es aus **Fig. 16** ersichtlich ist, beinhaltet das klassifizierte Netz von semantischen Struktureinheiten drei Hierarchieebenen, das heißt, die Ebene der Aminosäuren, die Ebene der Peptide und die Ebene Proteine. Auf unterschiedlichen Ebenen sind hierbei ebenso semantische Struktureinheiten vorhanden, die hinsichtlich der Protein-Datenstruktur keine Bedeutung tragen und demgemäß als fiktive semantische Einheiten klassifiziert sind. Die mittels Verknüpfungsobjekten realisierten Beziehungen sind in **Fig. 16** mittels Strichen zwischen jeweiligen semantischen Struktureinheiten dargestellt.

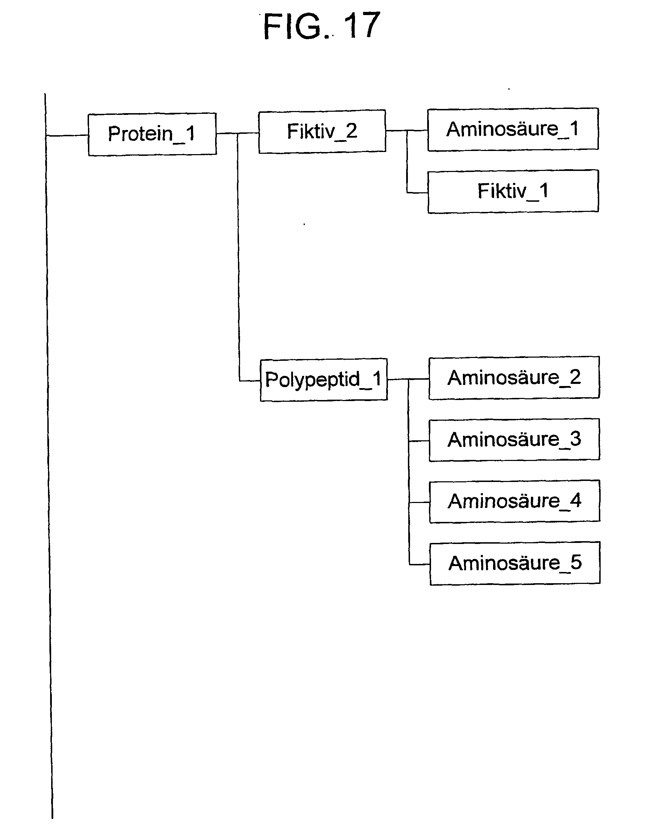

**Fig. 17** zeigt eine Darstellung von Klassenobjekten in einer Gruppierungshierarchie gemäß der Protein-Datenstruktur in **Fig. 16,** wobei in **Fig. 16** von links nach rechts die Darstellung von der obersten zu der untersten Hierarchieebene in **Fig. 16** erfolgt.

Obgleich dies in den Figuren **12 bis 17** nicht dargestellt ist, sind die drei Netze von semantischen Struktureinheiten der DNA-, RNA- und Protein-Datenstrukturen weiterhin mittels eines aus Verknüpfungsobjekten realisierten Koppelnetzes miteinander verschränkt. Dies wird zum Beispiel auf eine derartige Weise durchgeführt, daß zum Beispiel übergeordnete semantische Struktureinheiten untergeordnete Struktureinheiten aus unterschiedlichen Netzen von semantischen Struktureinheiten aufweisen. Ferner können Nachbarschafts- und Ähnlichkeitsbeziehungen zwischen semantischen Struktureinheiten vorliegen.

Zum Beispiel kann das Codon_1 in der DNA **(Fig. 12)** eine Beziehung von "Codon_1 in DNA ist Kopie von Codogen_1" zu dem Codogen_1 in der RNA **(Fig. 13)** aufweisen. Derartige Beziehungen können zwischen allen Netzen von semantischen Struktureinheiten vorhanden sein und in alle beliebige Richtungen einen Informationsfluß gewährleisten.

Bezüglich weiterer Merkmale und Vorteile der vorliegenden Erfindung wird ausdrücklich auf die Offenbarung der Zeichnung verwiesen.

## Patentansprüche

1. Computer-implementiertes Verfahren zur Verarbeitung von strukturell und inhaltlich unterschiedlichen Datenstrukturen mittels miteinander vernetzten semantischen Einheiten, wobei das Verfahren die folgenden Schritte aufweist:
**[a]** Erfassen von Daten, aus denen die unterschiedlichen Datenstrukturen ableitbar sind, wobei jeweilige Datenstrukturen in jeweiligen mittels eines Koppelnetzes miteinander vernetzten Netzen von semantischen Struktureinheiten abgebildet werden; und
**[b]** Erzeugen, Analysieren, Abwandeln, Löschen und/oder Speichern der semantischen Struktureinheiten und/oder deren Vernetzung aufgrund der erfaßten Daten unter Verwendung einer aus einem Netz von semantischen Wissenseinheiten bestehenden Wissensbasis, wobei:
in iterativen Schritten semantische Struktureinheiten und/oder deren Vernetzung klassifiziert werden und aufgrund dieser Klassifikation eine spezifische Verarbeitung aktivierbar ist, welche eine jeweilige semantische Struktureinheit und/oder ein bestimmtes Teilnetz verändert, und
semantische Struktureinheiten erzeugt werden, denen bei einer Klassifikation mittels des Netzes von semantischen Wissenseinheiten lediglich eine fiktive Bedeutung zugewiesen wird.

2. Verfahren nach Anspruch 1, ***dadurch gekennzeichnet, daß*** die semantischen Struktureinheiten, denen lediglich eine fiktive Bedeutung zugewiesen ist, bei einer weiteren Klassifikation berücksichtigt werden.

3. Verfahren nach Anspruch 1 oder 2, ***dadurch gekennzeichnet, daß*** jedes der semantischen Netze von Struktureinheiten eine Hierarchie mit Hierarchieebenen von übergeordneten, untergeordneten und benachbarten semantischen Struktureinheiten aufweist.

4. Verfahren nach Anspruch 3, ***dadurch gekennzeichnet, daß*** übergeordnete semantische Struktureinheiten untergeordnete Struktureinheiten aus unterschiedlichen Netzen von semantischen Struktureinheiten aufweisen.

5. Verfahren nach Anspruch 3 oder 4, ***dadurch gekennzeichnet, daß*** die Daten in einer oder mehreren beliebigen Hierarchieebenen erfaßt werden.

6. Verfahren nach einem der vorhergehenden Ansprüche, ***dadurch gekennzeichnet, daß*** die Netze von semantischen Struktureinheiten einander überlappen.

7. Verfahren nach einem der vorhergehenden Ansprüche, ***dadurch gekennzeichnet, daß*** im Schritt **[b]** eine Vernetzung zwischen Netzen von semantischen Struktureinheiten verändert wird.

8. Verfahren nach einem der vorhergehenden Ansprüche, ***dadurch gekennzeichnet, daß*** im Schritt **[b]** eine Vernetzung zwischen dem Netz von semantischen Wissenseinheiten und den Netzen von semantischen Struktureinheiten verändert wird.

9. Verfahren nach einem der vorhergehenden Ansprüche, ***dadurch gekennzeichnet, daß*** die mehreren unterschiedlichen Datenstrukturen zueinander verwandte biologische, biochemische, biomedizinische und/oder genetische Datenstrukturen sind.

10. Verfahren nach Anspruch 9, ***dadurch gekennzeichnet, daß*** die mehreren unterschiedlichen Datenstrukturen DNA-Datenstrukturen, RNA-Datenstrukturen und/oder Protein-Datenstrukturen sind, die jeweils in einem Netz von semantischen Struktureinheiten abgebildet werden.

11. Verfahren nach Anspruch 10, ***dadurch gekennzeichnet, daß*** Netze von semantischen Struktureinheiten für DNA-, RNA- und Protein-Datenstrukturen eine derartige hierarchische Struktur aufweisen, daß aufgrund unterschiedlicher Hierarchieebenen ein Organismus oder mehrere Organismen abbildbar sind, wobei Daten in mindestens einen Teilbereich einer oder mehrerer Hierarchieebenen eines oder mehrerer der Netze von semantischen Struktureinheiten eingebbar sind und mittels der Klassifikation eine Funktionsanalyse von semantischen Struktureinheiten in Abhängigkeit von eingegebenen Daten derart erfolgt, daß eine jeweilige Funktion von semantischen Struktureinheiten und von deren Vernetzungen durch alle Netze und zwischen allen Netzen von semantischen Struktureinheiten bestimmt und/oder verändert wird und als Ergebnis der Funktionsanalyse gegebenenfalls die in dem Netz von semantischen Wissenseinheiten vorhandene Wissensbasis verändert wird.

12. Verfahren nach Anspruch 11, ***dadurch gekennzeichnet*, *daß*** die Funktionsanalyse diagnostischen Zwecken dient, um Ursachen von Änderungen innerhalb eines Organismus oder mehreren Organismen zu ermitteln.

13. Verfahren nach einem der Ansprüche 10 bis 12, ***dadurch gekennzeichnet, daß*** die Klassifikation durch Vergleichen, Zuordnen, Rückführen und Ableiten der mehreren unterschiedlichen Datenstrukturen derart durchgeführt wird, daß
jeweilige Netze von semantischen Struktureinheiten der mehreren unterschiedlichen Datenstrukturen mittels des Netzes von semantischen Wissenseinheiten selbst klassifiziert werden und in Abhängigkeit von dieser Klassifikation Beziehungen und Vernetzungen innerhalb der jeweiligen Netze von semantischen Struktureinheiten der mehreren unterschiedlichen Datenstrukturen erzeugt werden, und
die jeweiligen Netze von semantischen Struktureinheiten der mehreren unterschiedlichen Datenstrukturen mittels des Netzes von semantischen Wissenseinheiten zueinander klassifiziert werden und in Abhängigkeit von dieser Klassifikation Beziehungen und Vernetzungen zwischen den jeweiligen Netzen von semantischen Struktureinheiten der mehreren unterschiedlichen Datenstrukturen erzeugt werden.

14. Verfahren nach Anspruch 13, ***dadurch gekennzeichnet, daß*** Vernetzungen zwischen den jeweiligen der Netze von semantischen Struktureinheiten der mehreren unterschiedlichen Datenstrukturen mittels einer Klassifikation von Informationsflüssen von einem Netz von semantischen Struktureinheiten der DNA-Datenstrukturen zu einem Netz von semantischen Struktureinheiten der RNA-Datenstrukturen zu einem Netz von semantischen Struktureinheiten der Protein-Datenstrukturen und ähnlichen rückläufigen Prozessen erfolgen.

15. Verfahren nach einem der Ansprüche 9 bis 14, ***dadurch gekennzeichnet, daß*** semantische Struktureinheiten Strukturobjekte, semantische Struktureinheiten verknüpfende Verknüpfungsobjekte oder Netze/Teilnetze von semantischen Struktureinheiten sind.

16. Verfahren nach Anspruch 15, ***dadurch gekennzeichnet, daß*** die semantischen Strukturobjekte in einer Ober-Strukturobjekt-, Unter-Strukturobjekt- und Nachbar-Strukturobjekt-Hierarchie in den Netzen von semantischen Struktureinheiten vorliegen, wobei jeweilige Verknüpfungsobjekte jeweilige Beziehungen zwischen jeweiligen Strukturobjekten definieren.

17. Verfahren nach Anspruch 16, ***dadurch gekennzeichnet, daß*** die Beziehungen Nachbarschaftsbeziehungen, Ähnlichkeitsbeziehungen, Beziehungen zu Ober-Strukturobjekten und Beziehungen zu Unter-Strukturobjekten beinhalten.

18. Verfahren nach einem der Ansprüche 10 bis 17, ***dadurch gekennzeichnet, daß*** DNA-Sequenzen in einem Netz von semantischen Struktureinheiten von DNA-Datenstrukturen **dadurch** klassifiziert werden, daß Nukleotid-Struktureinheiten in Dreiersequenzen zu neu gebildeten Codogen-Struktureinheiten gruppiert werden und Beziehungen zwischen semantischen Struktureinheiten gebildet werden, wobei die Beziehungen Nachbarschaftsbeziehungen, Ähnlichkeitsbeziehungen, Beziehungen zu Ober-Strukturobjekten und Beziehungen zu Unter-Strukturobjekten beinhalten.

19. Verfahren nach einem der Ansprüche 10 bis 18, ***dadurch gekennzeichnet, daß*** RNA-Sequenzen in einem Netz von semantischen Struktureinheiten von RNA-Datenstrukturen **dadurch** klassifiziert werden, daß Nukleotid-Struktureinheiten in Dreiersequenzen zu neu gebildeten Codon-Struktureinheiten gruppiert werden und Beziehungen zwischen semantischen Struktureinheiten gebildet werden, wobei die Beziehungen Nachbarschaftsbeziehungen, Ähnlichkeitsbeziehungen, Beziehungen zu Ober-Strukturobjekten und Beziehungen zu Unter-Strukturobjekten beinhalten.

20. Verfahren nach einem der Ansprüche 10 bis 19, ***dadurch gekennzeichnet, daß*** Beziehungen zwischen DNA-Sequenzen in einem Netz von semantischen Struktureinheiten von DNA-Datenstrukturen und RNA-Sequenzen in einem Netz von semantischen Struktureinheiten von RNA-Datenstrukturen durch semantische Struktureinheiten gebildet werden, welche eine Zuordnung von semantischen DNA-Struktureinheiten zu semantischen RNA-Struktureinheiten beschreiben.

21. Verfahren nach einem der Ansprüche 10 bis 20, ***dadurch gekennzeichnet, daß*** eine Klassifikation von semantischen Struktureinheiten, die Aminosäuren beschreiben, in einem Netz von semantischen Struktureinheiten von Protein-Datenstrukturen derart durchgeführt wird, daß die semantischen Struktureinheiten, die Aminosäuren beschreiben, gruppiert werden, semantische Struktureinheiten für die gebildeten Aminosäuregruppen gebildet werden und Beziehungen zwischen den semantischen Struktureinheiten gebildet werden, wobei die Beziehungen Nachbarschaftsbeziehungen zwischen den semantischen Struktureinheiten, die Aminosäuren beschreiben, und Ähnlichkeitsbeziehungen zwischen den semantischen Struktureinheiten, die Aminosäuren beschreiben, beinhalten und wobei semantische Struktureinheiten erzeugt und definiert werden, die Beziehungen zu semantischen Enzym-Struktureinheiten beschreiben und semantische Struktureinheiten erzeugt werden, die Beziehungen zu Ober-Strukturobjekten beschreiben.

22. Verfahren nach Anspruch 21, ***dadurch gekennzeichnet, daß*** die Ober-Strükturobjekte semantische Protein-Struktureinheiten sind.

23. Verfahren nach einem der Ansprüche 10 bis 22, ***dadurch gekennzeichnet, daß*** lokale Prozesse als semantische Einheiten klassifiziert werden, welche Prozesse einer Umwandlung biologischer Information beschreiben.

24. Verfahren nach Anspruch 23, ***dadurch gekennzeichnet, daß*** die lokalen Prozesse beschrieben werden durch:
Kopieren einer DNA-Struktureinheit zu einer RNA-Struktureinheit;
Fusionieren von semantischen Struktureinheiten für Nukleotidtripletts zu semantischen Struktureinheiten für ein Operon;
Trennen von semantischen Einheiten für Nukleotidtriplettgruppen zu einzelnen semantischen Struktureinheiten für ein Nukleotidtriplett;
Umgruppieren von semantischen Struktureinheiten für Nukleotidtripletts von einer semantischen Struktureinheit für ein Operon zu einer anderen semantischen Struktureinheit für ein Operon;
Löschen von semantischen Struktureinheiten für Nukleotidtripletts innerhalb einer semantischen Struktureinheit für ein Operon; und
Zuordnen von semantischen Struktureinheiten für Nukleotidtripletts zu semantischen Struktureinheiten für ein Operon.

25. Verfahren nach einem der Ansprüche 10 bis 24, ***dadurch gekennzeichnet, daß*** lokale Prozesse als semantische Einheiten klassifiziert werden, welche Prozesse einer Umwandlung biochemischer und genetischer Information beschreiben.

26. Verfahren nach Anspruch 25, ***dadurch gekennzeichnet, daß*** die lokalen Prozesse beschrieben werden durch:
Zuordnen von semantischen Struktureinheiten für Aminosäuren zu einer semantischen Struktureinheit für eine m-RNA;
Fusionieren von semantischen Struktureinheiten für Aminosäuren zu höheren semantischen Struktureinheiten innerhalb eines Proteins und Erzeugen von deren Zuordnung zu semantischen Struktureinheiten für Stoffwechselprozesse;
Trennen von semantischen Struktureinheiten für Aminosäuregruppen zu einzelnen semantischen Struktureinheiten für eine Aminosäure;
Umgruppieren von semantischen Struktureinheiten für Aminosäuren oder Aminosäuregruppen;
Löschen von semantischen Struktureinheiten für Aminosäuren innerhalb eines Teilnetzes, welches eine semantische Struktureinheit für ein Protein beschreibt;
Zuordnen von semantischen Struktureinheiten für Aminosäuren zu den semantischen Struktureinheiten für Proteine; und
Bilden von semantischen Verknüpfungsobjekten zwischen den semantischen Struktureinheiten für Aminosäuren, den semantischen Struktureinheiten für Aminosäuregruppen und den semantischen Struktureinheiten für Proteine.

27. Verfahren nach einem der Ansprüche 10 bis 26 ***dadurch gekennzeichnet, daß*** semantische Verknüpfungsobjekte gebildet werden, die eine Zuordnung einer semantischen Struktureinheit für eine t-RNA zu unterschiedlichen Aminosäuren bei der Proteinbildung beschreiben.

28. Verfahren nach einem der Ansprüche 10 bis 27, ***dadurch gekennzeichnet, daß*** semantische Struktureinheiten gebildet werden, die lokale Prozesse eines Kopierens, eines Suchens, eines Anregens, eines Auswählens und eines Andockens als semantische Prozessierungsobjekte beschreiben.

29. Verfahren nach einem der Ansprüche 10 bis 28, ***dadurch gekennzeichnet, daß*** folgende Prozesse innerhalb einer Datenstruktur durchführbar sind:
Fusionieren von zwei oder -mehreren Codon-Struktureinheiten zu einer neuen Ober-Struktureinheit, wobei gleichzeitig die diesen zugehörigen Nukleotid-Struktureinheiten aufgeteilt und neue Nachbarschaftsbeziehungen zwischen diesen erzeugt werden;
Fusionieren von zwei oder mehreren Codon- oder Operon-Struktureinheiten zu einer größeren Struktureinheit durch Erzeugen einer neuen Hierarchieebene, wobei die entsprechenden Codon- oder Operon-Struktureinheiten die Unter-Struktureinheiten von dieser neuen größeren Struktureinheit bilden;
Einordnen von zwei oder mehreren neuen Struktureinheiten innerhalb eines Netzes von semantischen Struktureinheiten auf eine derartige Weise, daß bei dem Erzeugen einer neuen Einordnung eine Struktureinheit zu einer Unter-Struktureinheit einer anderen Struktureinheit wird;
Trennen einer Struktureinheit von ihrer Ober-Struktureinheit durch Erzeugen einer neuen Art einer Nachbarschaftsbeziehung zu der früheren Ober-Struktureinheit;
neues Zuordnen einer Struktureinheit zu einer neuen Unter-Struktureinheit; und
Umgruppieren einer Struktureinheit von einer Gruppe von Struktureinheiten zu einer anderen Gruppe von Struktureinheiten.

30. Verfahren nach einem der vorhergehenden Ansprüche, ***dadurch gekennzeichnet, daß*** ein Klassifikationsalgorithmus durch Stringmatching gestartet wird, wobei Wissenseinheiten durch bestimmte Strings **gekennzeichnet** sind und der Klassifikationsalgorithmus Teilstücke in den mehreren unterschiedlichen Datenstrukturen mit gleichen oder ähnlichen Strings erkennt und von semantischen Struktureinheiten, die diesen Teilstücken entsprechen, Klassifikationsverbindungen zu entsprechenden Wissenseinheiten erzeugt, wodurch wiederum neue Algorithmen aufrufbar sind.

31. Verfahren nach Anspruch 30, ***dadurch gekennzeichnet, daß*** die Klassifikation durch Attribute erfolgt.

32. Verfahren nach Anspruch 31, ***dadurch gekennzeichnet, daß*** die Attribute die Strings Code, Inhalt, Länge, Varianz, Textur und Position beinhalten.

33. Verfahren nach einem der vorhergehenden Ansprüche, ***dadurch gekennzeichnet, daß*** die Klassifikation durch Nachbarschaftsbeziehungen erfolgt.

34. Verfahren nach Anspruch 33, ***dadurch gekennzeichnet, daß*** die Nachbarschaftsbeziehungen beinhalten, welche Nachbarn, welche Beziehung zu den Nachbarn, welche Ober-Einheiten, welche Unter-Einheiten und welche Beziehungen zu den Ober-Einheiten und/oder Unter-Einheiten vorhanden sind.

## Claims

1. A method for processing data structures of different structures and contents by means of networked semantic units, which method includes the steps of:
**[a]** acquisition of data wherefrom the different data structures are derivable, wherein respective data structures are represented in respective networks of semantic structure units networked by a coupling network; and
**[b]** generating, analyzing, modifying, deleting and/or storing the semantic structure units and/or networking them based on the acquired data by using a knowledge base comprised of a network of semantic knowledge units, wherein
in iterative steps semantic structure units and/or the networking thereof are classified and a specific processing may be activated thanks to this classification, which specific processing modifies a respective semantic structure unit and/or a particular partial network, and
semantic structure units are generated which are merely allocated a fictitious meaning in a classification by means of the network of semantic knowledge units.

2. The method in accordance with claim 1, ***characterized in that*** the semantic structure units having merely been allocated a fictitious meaning are taken into consideration in another classification

3. The method in accordance with claim 1 or 2, ***characterized in that*** each of the semantic networks of structure units includes a hierarchy with hierarchy levels of superordinate, subordinate and neighboring semantic structure units.

4. The method in accordance with claim 3, ***characterized in that*** superordinate semantic structure units comprise subordinate structure units from different networks of semantic structure units.

5. The method in accordance with claim 3 or 4, ***characterized in that*** data is acquired in one or several arbitrary hierarchy levels.

6. The method in accordance with any one of the preceding claims, ***characterized in that*** the networks of semantic structure units overlap each other.

7. The method in accordance with any one of the preceding claims, ***characterized in that*** in step **[b]** a networking between networks of semantic structure units is changed.

8. The method in accordance with any one of the preceding claims, ***characterized in that*** in step **[b]** a networking between the network of semantic knowledge units and the networks of semantic structure units is changed.

9. The method in accordance with any one of the preceding claims, ***characterized in that*** the several different data structures are interrelated biological, biochemical, bio-medical and/or genetic data structures.

10. The method in accordance with claim 9, ***characterized in that*** the several different data structures are DNA data structures, RNA data structures and/or protein data structures that are each represented in a network of semantic structure units.

11. The method in accordance with claim 10, ***characterized in that*** networks of semantic structure units for DNA-, RNA- and protein data structures have a hierarchical structure such that based on different hierarchy levels an organism or several organisms may be represented, wherein data may be input at least into a partial area of one or several hierarchy levels of one or several of the networks of semantic structure units, and with the aid of the classification, a functional analysis of semantic structure units is performed in dependence on input data, such that a respective function of semantic structure units and of their networkings is determined and/or changed by all networks and between all networks of semantic structure units, and as a result of the functional analysis, the knowledge base present in the network of semantic knowledge units possibly will be changed.

12. The method in accordance with claim 11, ***characterized in that*** function analysis serves diagnostic purposes so as to determine causes of changes inside an organism or several organisms.

13. The method in accordance with any one of claims 10 to 12, ***characterized in that*** the classification is carried out by comparing, allocating, feeding back and deriving the several different data structures in such a manner that
respective networks of semantic structure units of the several different data structures are classified by means of the network of semantic knowledge units themselves and in dependence on this classification relationships and networkings within the respective networks of semantic structure units of the several different data structures are generated, and
the respective networks of semantic structure units of the several different data structures are classified with respect to each other by means of the network of semantic knowledge units, and relationships and networkings between the respective networks of semantic structure units of the several different data structures are generated in dependence on this classification.

14. The method in accordance with claim 13, ***characterized in that*** networking between the respective ones of the networks of semantic structure units of the several different data structures takes place with the aid of a classification of information flows from a network of semantic structure units of the DNA data structures to a network of semantic structure units of the RNA data structures to a network of semantic structure units of the protein data structures and similar regressive processes.

15. The method in accordance with any one of claims 9 to 14, ***characterized in that*** semantic structure units are structure objects, linking objects linking semantic structure units, or networks/partial networks of semantic structure units.

16. The method in accordance with claim 15, ***characterized in that*** the semantic structure objects are present in a super-structure object hierarchy, sub-structure object hierarchy and neighbor-structure object hierarchy in the networks of semantic structure units, with respective linking objects defining respective relationships between respective structure objects.

17. The method in accordance with claim 16, ***characterized in that*** the relationships include neighborhood relationships, similarity relationships, relationships with super-structure objects, and relationships with sub-structure objects.

18. The method in accordance with any one of claims 10 to 17, ***characterized in that*** DNA sequences in a network of semantic structure units of DNA data structures are classified **in that** nucleotide structure units are grouped in sequences of three into newly formed codogen structure units and relationships between semantic structure units are formed, wherein the relationships include neighborhood relationships, similarity relationships, relationships with super-structure objects and relationships with sub-structure objects.

19. The method in accordance with any one of claims 10 to 18, ***characterized in that*** RNA sequences are classified in a network of semantic structure units of RNA data structures **in that** nucleotide structure units are grouped in sequences of three into newly formed codon structure units and relationships between semantic structure units are formed, wherein the relationships include neighborhood relationships, similarity relationships, relationships with super-structure objects and relationships with sub-structure objects.

20. The method in accordance with any one of claims 10 to 19, ***characterized in that*** relationships between DNA sequences in a network of semantic structure units of DNA data structures and RNA sequences in a network of semantic structure units of RNA data structures are formed by semantic structure units describing an allocation of semantic DNA structure units to semantic RNA structure units.

21. The method in accordance with any one of claims 10 to 20, ***characterized in that*** a classification of semantic structure units describing amino acids is carried out in a network of semantic structure units of protein data structures in such a manner that the semantic structure units describing amino acids are grouped, semantic structure units for the formed amino acid groups are formed, and relationships between the semantic structure units are formed, wherein the relationships include neighborhood relationships between the semantic structure units describing amino acids and similarity relationships between the semantic structure units describing amino acids, and wherein semantic structure units are generated and defined which describe relationships with semantic enzyme structure units, and semantic structure units are generated which describe relationships with super-structure objects.

22. The method in accordance with claim 21, ***characterized in that*** the super-structure objects are semantic protein structure units.

23. The method in accordance with any one of claims 10 to 22, ***characterized in that*** local processes are classified as semantic units describing processes of a transformation of biological information.

24. The method in accordance with claim 23, ***characterized in that*** the local processes are described by:
copying a DNA structure unit to an RNA structure unit;
fusing semantic structure units for nucleotide triplets into semantic structure units for an operon;
separating semantic units for nucleotide triplet groups into single semantic structure units for a nucleotide triplet;
regrouping semantic structure units for nucleotide triplets of a semantic structure unit for an operon into another semantic structure unit for an operon;
deleting semantic structure units for nucleotide triplets within a semantic structure unit for an operon; and
allocating semantic structure units for nucleotide triplets to semantic structure units for an operon.

25. The method in accordance with any one of claims 10 to 24, ***characterized in that*** local processes are classified as semantic units describing processes of a transformation of biochemical and genetic information.

26. The method in accordance with claim 25, ***characterized in that*** the local processes are described by:
allocating semantic structure units for amino acids to a semantic structure unit for an m-RNA;
fusing semantic structure units for amino acids into higher semantic structure units within a protein and generating its allocation to semantic structure units for metabolic processes;
separating semantic structure units for amino acid groups into single semantic structure units for an amino acid;
regrouping semantic structure units for amino acids or amino acid groups;
deleting semantic structure units for amino acids within a partial network describing a semantic structure unit for a protein;
allocating semantic structure units for amino acids to the semantic structure units for proteins; and
forming semantic linking objects between the semantic structure units for amino acids, the semantic structure units for amino acid groups, and the semantic structure units for proteins.

27. The method in accordance with any one of claims 10 to 26, ***characterized in that*** semantic linking objects are formed which describe an allocation of a semantic structure unit for a t-RNA to different amino acids in protein formation.

28. The method in accordance with any one of claims 10 to 27, ***characterized in that*** semantic structure units are formed which describe local processes of copying, of searching, of prompting, of selecting, and of docking as semantic processing objects.

29. The method in accordance with any one of claims 10 to 28, ***characterized in that*** the following processes may be performed within a data structure:
fusing two or more codon structure units into a new super-structure unit, wherein at the same time the nucleotide structure units pertaining thereto are divided and new neighborhood relationships between these are generated;
fusing two or more codon or operon structure units into a larger structure unit by generating a new hierarchy level, wherein the corresponding codon or operon structure units form the sub-structure units of this new, larger structure unit;
incorporating two or more new structure units within a network of semantic structure units in such a way that upon generation of a new incorporation, a structure unit becomes a sub-structure unit of another structure unit;
separating a structure unit from its super-structure unit by generating a new kind of a neighborhood relationship with the former super-structure unit;
newly allocating a structure unit to a new sub-structure unit; and
regrouping a structure unit from one group of structure units to another group of structure units.

30. The method in accordance with any one of the preceding claims, ***characterized in that*** a classification algorithm is started by string-matching, wherein knowledge units are **characterized by** particular strings and the classification algorithm recognizes fragments in the several different data structures having identical or similar strings, and generates classification connections with corresponding knowledge units of semantic structure units which correspond to these fragments, whereby in turn new algorithms may be called up.

31. The method in accordance with claim 30, ***characterized in that*** classification is carried out with the aid of attributes.

32. The method in accordance with claim 31, ***characterized in that*** the attributes include the strings code, content, length, variance, texture and position.

33. The method in accordance with any one of the preceding claims, ***characterized in that*** classification is carried out with the aid of neighborhood relationships.

34. The method in accordance with claim 33, ***characterized in that*** the neighborhood relationships include what neighbors, what relationship with the neighbors, what super-units, what sub-units and what relationships with the super-units and/or sub-units exist.

## Revendications

1. Procédé pour le traitement de structures de données qui sont différentes du point de vue de la structure et du contenu, à l'aide d'unités sémantiques reliées entre elles, le procédé présentant les étapes suivantes:
[a] détection de données, à partir desquelles les différentes structures de données peuvent être dérivées, des structures respectives de données étant produites dans des réseaux respectifs, reliés entre eux au moyen d'un réseau de couplage, d'unités de structure sémantiques; et
[b] production, analyse, modification, effacement et/ou mémorisation des unités de structure sémantiques et/ou leur maillage sur la base des données détectées moyennant l'utilisation d'une base de connaissances constituées par un réseau d'unités de connaissances sémantiques, selon lequel:
selon des étapes itératives, des unités de structure sémantiques et/ou leur liaison sont classées et, sur la base de cette classification, un traitement spécifique peut être activé, qui modifie une unité de structure sémantique respective et/ou un réseau partiel déterminé, et
des unités de structure sémantiques sont produites, auxquelles seule une signification fictive est affectée lors d'une classification à l'aide du réseau d'unités de connaissance sémantiques.

2. Procédé selon la revendication 1, **caractérisé en ce que** les unités de structure sémantiques auxquelles seule une signification fictive est affectée, sont prises en compte dans une autre classification.

3. Procédé selon la revendication 1 ou 2, **caractérisé en ce que** chacun des réseaux sémantiques d'unités de structure comporte une hiérarchie avec des plans hiérarchiques d'unités de structure sémantiques disposées à un rang supérieur, disposées à un rang inférieur et voisines.

4. Procédé selon la revendication 3, **caractérisé en ce que** des unités de structure sémantiques de rang supérieur comportent des unités de structure de rang inférieur constituées par différents réseaux d'unités de structure sémantiques.

5. Procédé selon la revendication 3 ou 4, **caractérisé en ce que** les données sont détectées dans un plan hiérarchique ou dans plusieurs plans hiérarchiques quelconques.

6. Procédé selon l'une des revendications précédentes, **caractérisé en ce que** les réseaux d'unités de structure sémantiques se chevauchent.

7. Procédé selon l'une des revendications précédentes, **caractérisé en ce que** lors de l'étape [b], une liaison entre des réseaux d'unités de structure sémantiques est modifiée.

8. Procédé selon l'une des revendications précédentes, **caractérisé en ce que** lors de l'étape [b], une liaison entre le réseau d'unités de connaissances sémantiques et les réseaux d'unités de structure sémantiques est modifiée.

9. Procédé selon l'une des revendications précédentes, **caractérisé en ce que** la pluralité de différentes structures de données sont des structures de données biologiques, biochimiques, biomédicales et/ou génétiques apparentées entre elles.

10. Procédé selon la revendication 9, **caractérisé en ce que** la pluralité de structures différentes de données sont des structures de données d'ADN, de structures de données d'ARN et/ou des structures de données de protéines, qui sont reproduites respectivement dans un réseau d'unités de structure sémantiques.

11. Procédé selon la revendication 10, **caractérisé en ce que** des réseaux d'unités de structure sémantiques pour des structures de données d'ADN, d'ARN et de protéines possèdent une structure hiérarchique telle qu'en raison de différents plans hiérarchiques, on peut former l'image d'un organisme ou de plusieurs organismes, auquel cas des données peuvent être insérées dans au moins une zone partielle d'un ou de plusieurs plans hiérarchiques d'un ou de plusieurs des réseaux d'unités de structure sémantiques et une analyse de fonction d'unités de structure sémantiques s'effectue à l'aide de la classification en fonction de données introduites de telle sorte qu'une fonction respective d'unités de structure sémantiques et de leurs liaisons est déterminée et/ou modifiée par tous les réseaux et entre tous les réseaux d'unités de structure sémantiques, et, en tant que résultat de l'analyse de fonction, la base de connaissances présente dans le réseau d'unités de connaissances sémantiques est éventuellement modifiée.

12. Procédé selon la revendication 11, **caractérisé en ce que** l'analyse de fonction est utilisée à des fins de diagnostic pour déterminer des causes de variations à l'intérieur d'un organisme ou de plusieurs organismes.

13. Procédé selon l'une des revendications 10 à 12, **caractérisé en ce que** la classification est exécutée par comparaison, association, renvoi et dérivation de la pluralité de différentes structures de données de telle sorte que
les réseaux respectifs d'unités de structure sémantiques de la pluralité de structures différentes de données sont classés à l'aide du réseau d'unités de connaissances sémantiques elles-mêmes et, en fonction de cette classification, des relations et des liaisons à l'intérieur des réseaux respectifs d'unités de structure sémantiques de la pluralité de structures différentes de données sont produites, et
les réseaux respectifs d'unités de structure sémantiques de la pluralité de structures différentes de données sont classés les uns par rapport aux autres au moyen du réseau d'unités de connaissances sémantiques et, en fonction de cette classification, des relations et des liaisons entre les réseaux respectifs d'unités de structure sémantiques de la pluralité de structures différentes de données sont formées.

14. Procédé selon la revendication 13, **caractérisé en ce que** des liaisons entre les réseaux respectifs d'unités de structure sémantiques de la pluralité de structures différentes de données sont réalisées au moyen d'une classification de flux d'informations s'étendant depuis un réseau d'unités de structure sémantiques de la structure de données d'ADN à un réseau d'unités de structure sémantiques des structures de données ARN et à un réseau d'unités de structure sémantiques des structures de données de protéines et au moyen de processus rétrogrades similaires.

15. Procédé selon l'une des revendications 9 à 14, **caractérisé en ce que** des unités de structure sémantiques sont des objets de structure, des objets de combinaison combinant des unités de structure sémantiques, ou des réseaux / des réseaux partiels d'unités de structure sémantiques.

16. Procédé selon la revendication 15, **caractérisé en ce que** les objets de structure sémantiques sont présents dans une hiérarchie d'objets de structure supérieurs, d'objets de structures inférieurs et d'objets de structure voisins dans les réseaux d'unités de structure sémantiques, les objets de combinaison respectifs définissant des relations respectives entre des objets de structure respectifs.

17. Procédé selon la revendication 16, **caractérisé en ce que** les relations incluent des relations de voisinage, des relations de similitude, des relations à des objets de structure supérieurs et des relations à des objets de structure inférieurs.

18. Procédé selon l'une des revendications 10 à 17, **caractérisé en ce que** des séquences d'ADN dans un réseau d'unités de structure sémantiques de structures de données d'ADN sont classées par le fait que des unités de structure de nucléotides sont regroupées selon des séquences de trois pour constituer des unités de structure de codogènes nouvellement formées et des relations entre des unités de structure sémantiques sont formées, les relations incluant des relations de voisinage, des relations de similitude, des relations à des objets de structure supérieurs et des relations à des objets de structure inférieurs.

19. Procédé selon l'une des revendications 10 à 18, **caractérisé en ce que** des séquences d'ARN dans un réseau d'unités de structure sémantiques de structures de données d'ARN sont classées par le fait que des unités de structure de nucléotides sont regroupées selon des séquences de trois pour constituer des unités de structure de codogènes nouvellement formées et des relations entre des unités de structure sémantiques sont formées, les relations incluant des relations de voisinage, des relations de similitude, des relations à des objets de structure supérieurs et des relations à des objets de structure inférieurs.

20. Procédé selon l'une des revendications 10 à 19, **caractérisé en ce que** les relations entre des séquences d'ADN dans un réseau d'unités de structure sémantiques de structures de données d'ADN et de séquences d'ARN dans un réseau d'unités de structure sémantiques de structures de données d'ARN sont formées par des unités de structure sémantiques qui décrivent une association d'unités de structure d'ADN sémantiques à des unités de structure d'ARN sémantiques.

21. Procédé selon l'une des revendications 10 à 20, **caractérisé en ce qu'**une classification d'unités de structure sémantiques, qui décrivent des aminoacides, est réalisée dans un réseau d'unités de structure sémantiques de structures de données de protéines, est exécutée de telle sorte que les unités de structure sémantiques, qui décrivent des aminoacides, sont regroupées, des unités de structure sémantiques pour les groupes d'aminoacides formés sont créées et des relations entre les unités de structure sémantiques sont formées, selon lequel les relations incluent des relations de voisinage entre les unités de structure sémantiques, qui décrivent des aminoacides, et des relations de similitude entre les unités de structure sémantiques, qui décrivent des aminoacides, et selon lequel des unités de structure sémantiques sont produites et définies, ces unités de structure sémantiques décrivant des relations avec des unités de structure sémantiques d'enzymes, et des unités de structure sémantiques sont produites, unités de structure qui décrivent des relations avec des objets de structure supérieurs.

22. Procédé selon la revendication 21, **caractérisé en ce que** les objets de structure supérieurs sont des unités de structure sémantiques de protéines.

23. Procédé selon l'une des revendications 10 à 22, **caractérisé en ce que** des processus locaux sont classés en tant qu'unités sémantiques, qui décrivent les processus d'une conversion d'informations biologiques.

24. Procédé selon la revendication 23, **caractérisé en ce que** les processus locaux sont décrits par:
un copiage de l'unité de structure d'ADN en une unité de structure d'ARN;
la fusion d'unités de structure sémantiques pour des triplets de nucléotides pour former les unités de structure sémantiques pour un opéron;
la séparation d'unités sémantiques pour des groupes de triplets de nucléotides pour former des unités de structure sémantiques individuelles pour un triplet de nucléotides;
le regroupement d'unités de structure sémantiques pour des triplets de nucléotides d'une unité de structure sémantique pour passer d'une unité de structure sémantique pour un opéron à une autre unité de structure sémantique pour un opéron;
l'effacement d'unités de structure sémantiques pour des triplets de nucléotides à l'intérieur d'une unité de structure sémantique pour un opéron; et
l'association d'unités de structure sémantiques pour des triplets de nucléotides à des unités de structure sémantiques pour un opéron.

25. Procédé selon l'une des revendications 10 à 24, **caractérisé en ce que** les processus locaux sont classés en tant qu'unités sémantiques, qui décrivent des processus d'une conversion d'informations biochimiques et génétiques.

26. Procédé selon la revendication 25, **caractérisé en ce que** les processus locaux sont décrits par:
l'association d'unités de structure sémantiques pour des aminoacides pour former une unité de structure sémantique pour un m-ARN;
la fusion d'unités de structure sémantiques pour des aminoacides pour obtenir des unités de structure sémantiques à l'intérieur d'une protéine et produire leur association à des unités de structure sémantiques pour des processus métaboliques;
la séparation d'unités de structure sémantiques pour des groupes d'aminoacides pour former des unités de structure sémantiques individuelles pour un aminoacide;
le regroupement d'unités de structure sémantiques pour des aminoacides ou des groupes d'aminoacides;
l'effacement d'unités de structure sémantiques pour des aminoacides à l'intérieur d'un réseau partiel, qui décrit une unité de structure sémantique pour une protéine;
l'association d'unités de structure sémantiques pour des aminoacides aux unités de structure sémantiques pour des protéines; et
la formation d'objets de combinaison sémantiques entre les unités de structure sémantiques pour des aminoacides, les unités de structure sémantiques pour des groupes d'aminoacides et les unités de structure sémantiques pour des protéines.

27. Procédé selon l'une des revendications 10 à 26, **caractérisé en ce que** des objets de combinaison sémantiques sont formés, qui décrivent une association d'une unité de structure sémantique pour un t-ARN à des aminoacides différents lors de la formation d'une protéine.

28. Procédé selon l'une des revendications 10 à 27, **caractérisé en ce que** des unités de structure sémantiques sont formées, qui décrivent des processus locaux d'un copiage, d'une recherche, d'une excitation, d'une sélection et d'un raccordement en tant qu'objets de traitement sémantiques.

29. Procédé selon l'une des revendications 10 à 28, **caractérisé en ce que** les processus suivants peuvent être exécutés à l'intérieur d'une structure de données:
la fusion de deux ou plusieurs unités de structure de codon pour former une nouvelle unité de structure supérieure, auquel cas simultanément les unités de structure de nucléotides associées à ces unités de structure de codon sont divisées et de nouvelles relations de voisinage entre ces unités de structure de nucléotides sont produites;
la fusion de deux ou plusieurs unités de structure de codon et d'opéron pour former une unité de structure plus grande par production d'un nouveau plan hiérarchique, les unités de structure codon ou opéron correspondantes formant les unités de structure inférieures de cette nouvelle unité de structure plus grande;
le rangement de deux ou de plusieurs nouvelles unités de structure à l'intérieur d'un réseau d'unités de structure sémantiques de telle sorte que, lors de la production d'un nouveau rangement, une unité de structure devient une unité de structure inférieure d'une autre unité de structure;
la séparation de l'unité de structure par rapport à son unité de structure supérieure par production d'un nouveau type de relation de voisinage avec l'unité de structure supérieure antérieure;
la nouvelle association d'une unité de structure à une nouvelle unité de structure inférieure;
le regroupement d'une unité de structure d'un groupe d'unités de structure avec un autre groupe d'unités de structure.

30. Procédé selon l'une des revendications précédentes, **caractérisé en ce qu'**on fait démarrer un algorithme de classification au moyen d'une adaptation stringmatching, auquel cas des unités de connaissances sont **caractérisées par** des séquences déterminées et l'algorithme de classification identifie des parties dans la pluralité de structures différentes de données comportant des séquences identiques ou similaires, et produit, à partir de l'unité de structure sémantique, qui correspondent à ces parties, des liaisons de classification avec des unités de connaissances correspondantes, ce qui permet à nouveau d'appeler de nouveaux algorithmes.

31. Procédé selon la revendication 30, **caractérisé en ce que** la classification s'effectue à l'aide d'attributs.

32. Procédé selon la revendication 31, **caractérisé en ce que** les attributs incluent les séquences code, contenu, valeur, variance, texture et position.

33. Procédé selon l'une des revendications précédentes, **caractérisé en ce que** la classification s'effectue à l'aide de relations de voisinage.

34. Procédé selon la revendication 33, **caractérisé en ce qu'**elles relations de voisinage incluant le voisin, la relation avec le voisin, les unités supérieures, les unités inférieures et les relations avec les unités supérieures et/ou les unités inférieures, qui sont présents.
